(19) **Europäisches Patentamt** / **European Patent Office** / **Office européen des brevets**

(11) **EP 2 607 916 B1**

(12) **FASCICULE DE BREVET EUROPEEN**

(45) Date de publication et mention de la délivrance du brevet:
**03.12.2014 Bulletin 2014/49**

(51) Int Cl.:
*G01S 3/74* (2006.01)    *G01S 3/02* (2006.01)

(21) Numéro de dépôt: **12197477.8**

(22) Date de dépôt: **17.12.2012**

(54) **Procédé de localisation de sources émettrices par exploitation du couplage mutuel d'un réseau antennaire de petite base et système récepteur mono-voie à commutation rapide mettant en oeuvre le procédé**

Lokalisierungsverfahren von Sendequellen durch Ausnutzung der Transformatorkopplung eines Antennennetzes mit kleiner Basis, und Einkanal-Empfangssystem mit schneller Umschaltung zur Umsetzung dieses Verfahrens

Method for locating emitting sources by using the mutual coupling of a small-base antenna array and quick-switching single-channel receiving system implementing the method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2011 FR 1104008**

(43) Date de publication de la demande:
**26.06.2013 Bulletin 2013/26**

(73) Titulaire: **Thales**
**92200 Neuilly Sur Seine (FR)**

(72) Inventeurs:
• **DELAVEAU, François**
**92622 Gennevilliers Cedex (FR)**
• **LE MEINS, Cyrille**
**49309 Cholet (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**FR-A1- 2 872 350    FR-A1- 2 940 461**
**US-B1- 6 278 406**

• **ZHONGFU YE ET AL: "2-D DOA Estimation in the Presence of Mutual Coupling", IEEE TRANSACTIONS ON ANTENNAS AND PROPAGATION, IEEE SERVICE CENTER, PISCATAWAY, NJ, US, vol. 56, no. 10, 1 octobre 2008 (2008-10-01), pages 3150-3158, XP011235433, ISSN: 0018-926X, DOI: 10.1109/TAP.2008.929446**
• **SVANTESSON T ET AL: "High-resolution direction finding using a switched parasitic antenna", STATISTICAL SIGNAL PROCESSING, 2001. PROCEEDINGS OF THE 11TH IEEE SIGNAL PROCESSING WORKSHOP ON 6-8 AUGUST 2001, PISCATAWAY, NJ, USA,IEEE, 6 août 2001 (2001-08-06), pages 508-511, XP010561188, ISBN: 978-0-7803-7011-1**

**Description**

La présente invention concerne le domaine de la radiogoniométrie et plus précisément celui de la localisation de sources par détermination de la direction d'arrivée du signal émis par ces sources.

L'invention porte sur un procédé et un système de localisation mono-voie, c'est-à-dire pour lesquels le récepteur utilisé ne comporte qu'une seule voie de réception associée à un réseau antennaire de petite base ou petit diamètre. La commutation de la voie de réception entre les différents éléments du réseau antennaire doit être suffisamment rapide devant la durée d'un symbole du signal source.

Dans la suite de la description, l'expression « localisation de sources », vise notamment la détermination du nombre de sources émettrices d'un signal donné dans un environnement radioélectrique donné ainsi que la détermination des directions d'arrivées des signaux émis par ces sources. Une méthode de localisation de sources comprend, au sens large, toute méthode de radiogoniométrie, de séparation de sources, d'identification de signatures spatiales ou d'identification de vecteurs directeurs de sources.

L'invention a pour objectif de proposer un procédé et un système de localisation de sources à partir des signaux émis par ces sources et reçus par un récepteur monovoie associé à un réseau antennaire de petite base.

Le système réalisé doit présenter un coût de fabrication et un encombrement limité, notamment en vue de l'intégrer dans un équipement portatif équipé d'un réseau d'antennaire de petite base. Il doit également permettre de relâcher les contraintes sur la calibration dudit réseau.

Le procédé selon l'invention permet, notamment, de réaliser une analyse du signal reçu de façon continue ou quasi-continue et s'applique de ce fait à un grand nombre de signaux différents transmis selon des formes d'ondes continues ou discontinues, par exemple des formes d'ondes associées à des protocoles de type TDMA ou liées à des mécanismes d'évasion de fréquence, à bande de fréquence larges ou étroites, et ce, dans tout type d'environnement radioélectrique stationnaire ou non-stationnaire, même complexe en présence d' interférences ou de brouillage.

Le domaine de la radiogoniométrie a fait l'objet de nombreux travaux. Toutefois, les performances des systèmes bas couts et/ou à nombre réduit de voies de réception présentent des limitations quant aux performances qu'ils permettent d'atteindre.

En particulier, certains systèmes utilisent des antennes sectorisées ou directives qui offrent une capacité d'interception réduite et qui sont limités en basse fréquence par la taille insuffisante des antennes. Pour augmenter la capacité d'interception, ces solutions nécessitent des balayages coûteux en temps ou en composantes mécaniques.

D'autres solutions sont basées sur des procédés Doppler qui nécessitent un réseau antennaire à grande base et ne sont pas adaptées aux réseaux antennaires à petite base pour systèmes portatifs.

Les systèmes monovoies connus présentent en outre une limitation qui concerne la discontinuité des observations réalisées. En effet, lorsque le système de radiogoniométrie ne comporte qu'une seule voie de réception, celle-ci commute, par l'intermédiaire d'un commutateur, sur les différents éléments antennaires du réseau. Une discontinuité liée au temps de commutation apparait donc sur l'observation globale réalisée sur le réseau antennaire. Ce problème est impactant car il nécessite d'augmenter en conséquence la vitesse de commutation et la fréquence d'échantillonnage et de réduire les durées d'intégration. En outre, une observation discontinue entraine des performances dégradées pour des signaux à localiser qui sont émis selon une forme d'onde dite par paliers, ou « bursts » en anglais. Ce type de signal est caractérisé par des non-stationnarités rapides de la forme d'onde au contraire d'une forme d'onde dite continue. La discontinuité des observations est également problématique lorsqu'il s'agit de discriminer plusieurs sources émettant simultanément.

Les solutions de l'art antérieur ne sont pas non plus adaptées à des réseaux antennaires à petite base ou petit diamètre. En effet, ce type de réseau induit des contributions non négligeables des couplages entre éléments antennaires dont il est difficile de rendre compte de manière fiable dans les processus de calibration.

Le document US6278406B1 décrit un récepteur pour la localisation de sources qui supprime les composantes des signaux issues du couplage mutuel des antennes. Les suites temporelles des signaux sont multipliés par la matrice inverse de couplage et sont sujettes à une fenêtre mobile de moyennage.

On connait également les solutions basées sur l'emploi d'antennes à éléments parasites, par exemple celle décrite dans la publication « High-Resolution Direction Finding using a switched parasitic antenna », Thomas Svantesson et al, 11 th IEEE-Signal processing workshop singapore 2001, p 508-511.

Le principe de ces solutions est basé sur une commutation du diagramme d'antenne. Le réseau antennaire est composé de plusieurs éléments antennaires dont la majorité sont en circuit ouvert et servent de concentrateurs. A un instant donné, on mesure la tension aux bornes d'un seul élément. Un circuit de contrôle, à base de diodes, permet d'activer indépendamment chaque élément antennaire pour former le diagramme d'antenne souhaité et ainsi réaliser une commutation rapide.

Ces solutions présentent l'inconvénient que leurs performances sont étroitement liées aux géométries contraintes des antennes et aux tables de calibration des différents diagrammes formés par les différentes configurations des éléments parasites, tables qui doivent être très précisément déterminées.

En outre, si la commutation n'est pas assez rapide, la capacité d'interception est réduite car le diagramme d'antenne généré est directif, les éléments antennaires « parasites » étant principalement utilisés comme des réflecteurs pour augmenter le gain d'antenne dans la direction principale du diagramme.

Enfin, ces solutions souffrent également de problèmes de discontinuité et de régime transitoire des observations réalisées lors des commutations, même lorsqu'elles sont rapides

L'invention vise à remédier aux limitations précitées de l'art antérieur en proposant une solution de radiogoniométrie mono-voie adaptée à une commutation rapide de la voie de réception sur les différents éléments antennaires du réseau d'antennes.

L'invention permet de reconstituer une observation quasi-continue du signal d'entrée en exploitant les couplages et l'influence mutuelle entre éléments antennaires. L'invention permet ainsi de produire des estimateurs statistiques du signal observé sur des durées d'intégration longues afin d'améliorer significativement les performances des traitements de séparation de sources ou de détermination de la direction d'arrivée d'un signal.

A cet effet, l'invention a pour objet un procédé de localisation de sources émettant chacune un signal S caractérisé en ce qu'il comporte au moins les étapes suivantes exécutées par un système récepteur mono-voie :

- Réceptionner le ou les signaux en entrée d'un réseau d'antennes comportant une pluralité N d'éléments rayonnants en commutant successivement la voie de réception sur les N éléments rayonnants, la période de commutation $\Delta T$ étant configurée pour être strictement inférieure au rapport entre la demi-durée $T_S/2$ d'un symbole dudit signal S et le nombre N d'éléments rayonnants,

- Prélever, après chaque commutation successive, en sortie de chaque élément rayonnant , un échantillon du signal reçu afin de construire un vecteur X' du signal spatial reçu par le réseau d'antennes,

- Calculer au moins un premier estimateur statistique $M_{Q,X'}^{(Q)}$ d'ordre Q supérieur ou égal à 1 du signal spatial X' en sortie du réseau d'antennes,

- Déterminer au moins un second estimateur statistique $M_{Q,X}^{(Q)}$, de même ordre Q, pour le signal spatial X en entrée du réseau d'antennes en résolvant les systèmes d'équations $M_{Q,X'}^{(Q)} = C^{(Q)} . M_{Q,X}^{(Q)}$ où $C^{(Q)}$ est un auto-produit tensoriel d'ordre Q de la matrice de couplage C du réseau d'antennes, les composantes de ladite matrice de couplage C étant égales aux coefficients de couplage mutuel entre chaque paire d'éléments rayonnants dudit réseau d'antennes, ladite matrice de couplage C étant préalablement déterminée et stockée dans une base de données que comporte ledit système,

- Appliquer une méthode de localisation de sources, telle qu'une méthode de radiogoniométrie, de séparation de sources, d'identification de signature spatiale ou d'identification de vecteurs directeurs de sources, audit second estimateur statistique $M_{Q,X}^{(Q)}$.

Selon un aspect particulier de l'invention, lesdits estimateurs statistiques sont des estimateurs des moments ou des cumulants d'ordre Q ou plus précisément des estimateurs des produits croisés, de la variance ou de la covariance.

Dans une variante de réalisation, le procédé selon l'invention comporte en outre une étape de compensation des composantes du second estimateur statistique du signal spatial X par les valeurs de la fonction d'auto-corrélation $r_s(\tau)$ de la modulation dudit signal émis S, lesdites valeurs étant retardées d'un retard $\tau$ multiple de la période de commutation $\Delta T$.

Selon un aspect particulier de l'invention, lesdits estimateurs statistiques sont des estimateurs de la quadri-covariance.

Dans une variante de réalisation, le procédé selon l'invention comporte en outre une étape de compensation des composantes du second estimateur statistique du signal spatial X par les valeurs de la fonction de quadri-covariance $q_s(\tau_1, \tau_2, \tau_3)$ de la modulation dudit signal S, lesdites valeurs étant retardées de retards $\tau_1, \tau_2, \tau_3$ multiples de la période de commutation $\Delta T$.

Dans une variante de réalisation de l'invention, le prélèvement successif en sortie de chaque élément rayonnant est effectué selon une commutation circulaire.

Selon un aspect particulier de l'invention, pour générer la matrice de couplage C, chaque coefficient de couplage mutuel entre un premier et un second élément rayonnant est prédéterminé en imposant une tension et/ou en injectant un courant aux bornes du premier élément rayonnant et en mesurant la tension et/ou le courant aux bornes du second élément rayonnant.

La localisation d'une source peut consister à déterminer la direction d'arrivée de l'onde émise par cette source.

La méthode de localisation de sources peut être choisie parmi les méthodes suivantes : une méthode d'interférométrie corrélative, une méthode par corrélation vectorielle, une méthode par formation de voie adaptative, une méthode à sous-espace à l'ordre deux ou quatre, ou une méthode JADE.

Dans une variante de réalisation de l'invention, ledit signal S est recherché dans une bande de fréquence instantanée de valeur minimum $F_1$ et de valeur maximum $F_2$, ledit commutateur étant configuré en outre pour que sa période de commutation $\Delta T$ soit strictement inférieure à la quantité $1/(2.N.F_2)$.

L'invention a également pour objet un système récepteur pour la localisation de sources émettant chacune un signal S comprenant un réseau antennaire composé d'une pluralité d'éléments rayonnants, d'un commutateur pour prélever successivement le signal de sortie de chaque élément rayonnant, d'une voie de réception comprenant un convertisseur analogique-numérique et de moyens d'analyse et de calcul comprenant une unité de calcul et une base de données, caractérisé en ce que ledit commutateur est configuré pour que sa période de commutation $\Delta T$ soit strictement inférieure au rapport entre la demi-durée $T_S/2$ d'un symbole dudit signal S et le nombre N d'éléments rayonnants, la base de données contient les valeurs prédéterminées de la matrice de couplage C du réseau antennaire et les moyens d'analyse et de calcul sont adaptés à mettre en oeuvre le procédé de localisation de sources selon l'invention.

D'autres caractéristiques et avantages de l'invention apparaîtront à l'aide de la description qui suit faite en regard de dessins annexés qui représentent :

- La figure 1, un synoptique d'un système récepteur adapté à mettre en oeuvre le procédé selon l'invention,
- La figure 2, un schéma illustrant la commutation et l'échantillonnage du signal reçu,
- La figure 3, un schéma illustrant la construction du vecteur des signaux en entrée de l'unité de calcul d'un système récepteur selon l'invention,
- Les figures 4a et 4b, deux schémas illustrant le principe de mesures des coefficients de couplage entre éléments d'un réseau antennaire.

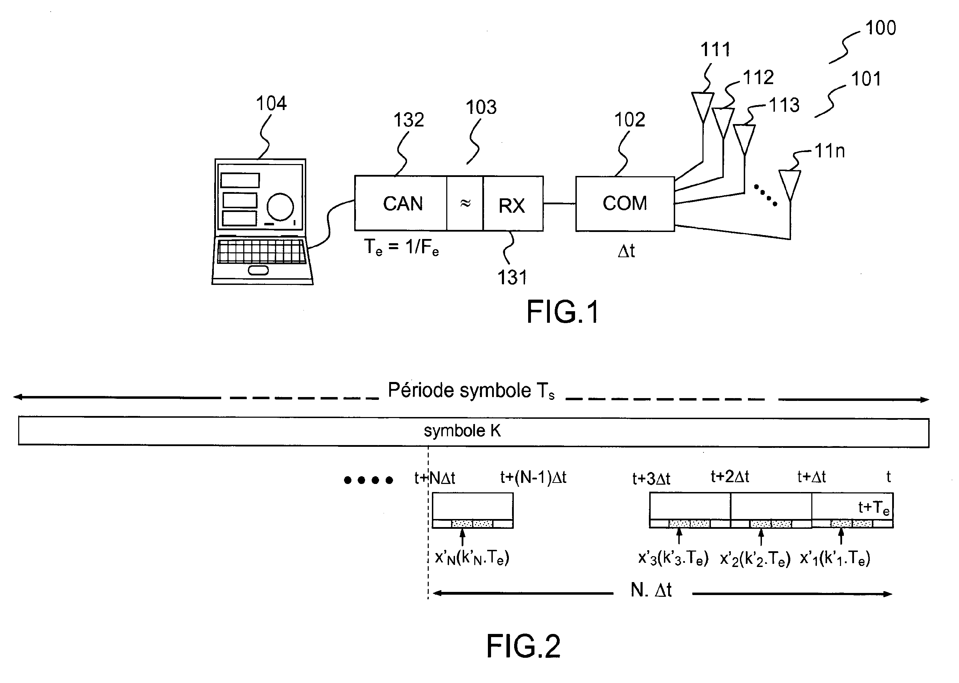

La figure 1 représente, sur un synoptique, un système récepteur 100 adapté à mettre en oeuvre un procédé de radiogoniométrie ou de séparation de sources selon l'invention.

Le système 100 comporte au moins un réseau antennaire 101 de petite base ou petit diamètre comportant une pluralité d'éléments rayonnants 111,112,113, ... 11n, aptes à recevoir un signal X émis par une source à localiser dans une bande de fréquence prédéterminée, par exemple la bande HF (Hautes Fréquences) ou VHF (Très hautes fréquences). Le système 100 comporte également un commutateur 102 apte à commuter successivement sur la sortie d'un des éléments rayonnants du réseau 101 pour transmettre le signal de sortie X' de cet élément vers une voie de réception 103. Un paramètre important du commutateur 102 est sa vitesse de commutation, ou sa période de commutation At entre deux éléments rayonnants. Une période de commutation courte ou une vitesse de commutation rapide a pour avantage de limiter les discontinuités dans l'acquisition du signal liées au temps nécessaire pour commuter d'un élément antennaire à un autre.

La voie de réception 103 comporte au moins une chaine d'amplification et/ou de filtrage 131 et un convertisseur analogique numérique 132 apte à numériser le signal reçu à une fréquence d'échantillonnage $F_e$ donnée.

Le système 100 comporte également des moyens 104 d'analyse et de traitement du signal numérisé qui comprennent une unité de calcul, une base de données et éventuellement une interface d'exploitation. L'unité de calcul est adaptée à mettre en oeuvre un procédé de traitement des signaux reçus pour les caractériser. La base de données contient certaines informations prédéterminées concernant le réseau antennaire et le cas échéant sur la nature du signal reçu notamment sa modulation.

Le procédé selon l'invention est applicable dans le cas où le commutateur 102 est configuré pour que sa vitesse de commutation soit rapide par rapport à la fréquence symbole du signal reçu à localiser. De cette façon, la durée d'un prélèvement spatial du signal reçu sur l'ensemble des éléments du réseau antennaire reste très inférieure à la moitié de la durée d'un symbole du signal reçu.

Plus précisément, une caractéristique essentielle de l'invention est que la période de commutation At est strictement inférieure au rapport entre la demi-durée $T_S$ d'un symbole du signal observé et le nombre N d'éléments du réseau antennaire 101. De cette façon, le commutateur 102 effectue, sur chaque symbole au moins, un parcours complet du réseau antennaire avant la fin d'un symbole du signal observé.

La figure 2 illustre, sur un diagramme, le principe d'une commutation rapide par rapport au temps symbole du signal reçu.

La figure 2 représente un symbole indicé par K, du signal reçu S, de durée $T_S$ définie par son rythme de modulation, et les prélèvements $x'_1,...x'_N$ effectués par le commutateur 102 sur chaque sortie d'un élément rayonnant du réseau antennaire 101 aux instants $t, t+\Delta t,... t+ (N-1)\Delta t$, avec $\Delta t$ la période de commutation. Un parcours complet du réseau antennaire 101 est effectué par le commutateur 102 avant la fin du symbole K. Précisément, dans l'exemple de la figure 2, un parcours complet est réalisé avant la fin de la moitié du symbole K.

Le signal prélevé par le commutateur 102 est ensuite numérisé à une fréquence d'échantillonnage donnée $F_e$. Dans l'exemple non limitatif de la figure 2, le rythme d'échantillonnage $T_e$ est égal à un quart de la période de commutation $\Delta t$.

L'ensemble des prélèvements x'$_1$,...x'$_N$ réalisés pendant la durée N.Δt forment un vecteur X' du signal de sortie du réseau antennaire 101. Les échantillons x'$_1$,...x'$_N$ de ce signal X' peuvent être pris dans le même symbole K du signal reçu du fait de la commutation rapide du commutateur 102 en moins dune demi-durée symbole

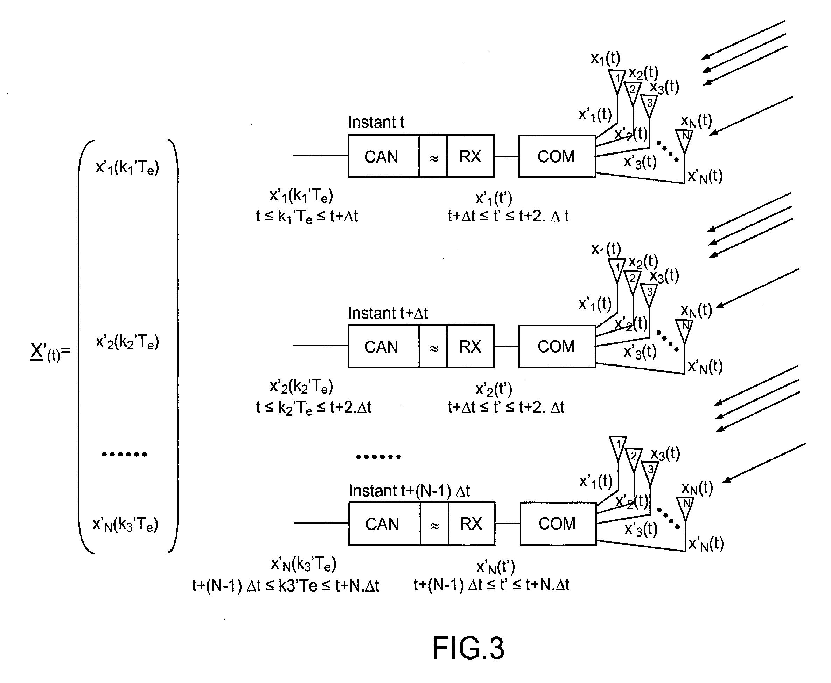

La construction du vecteur X' est illustrée sur la figure 3. Chaque composante du vecteur X' est égale au prélèvement, échantillonné, à un instant t+k$_i$Δt du signal de sortie d'un élément rayonnant du réseau antennaire. La période de commutation Δt correspond également à la période d'échantillonnage spatial du signal reçu. En effet, le même signal est reçu par les différents éléments du réseau antennaire et l'exploitation de la diversité spatiale en réception permet de mieux caractériser le signal en vue d'identifier sa direction d'arrivée.

Dans une variante de réalisation de l'invention, le parcours des éléments du réseau antennaire aux instants t+k$_i$Δt, avec i l'index d'un élément, i variant de 1 à N, n'est pas forcément circulaire. Précisément la série k$_1$,...k$_N$ n'est pas forcément croissante ni strictement périodique. Dans le cas d'une commutation circulaire telle que décrite dans les exemples des figures 2 et 3, on a k$_{i+1}$=k$_i$ + 1, mais le parcours du réseau antennaire peut aussi être effectué selon une série pseudo aléatoire. Dans ce cas, on note Δk la valeur maximum |k$_i$ - k$_j$| de l'écart entre deux indices temporels k$_i$ et k$_j$ après commutation sur tous les éléments du réseau. Δk.Δt est le support temporel des prélèvements numériques permettant de constituer le vecteur X' à partir de l'instant t. C'est cette valeur Δk.Δt qui doit être strictement inférieure à la demi-durée T$_S$/2 d'un symbole. Dans le cas d'une commutation circulaire, Δk = N.

Le procédé et le système selon l'invention s'appliquent avantageusement pour des réseaux antennaires de petite base ou de petit diamètre. Pour de tels réseaux, les éléments rayonnants sont proches les uns des autres et l'influence radioélectrique mutuelle d'un élément sur les autres n'est pas négligeable. L'exploitation de l'influence mutuelle entre éléments du réseau permet de garantir une observation quasi-continue du signal reçu.

Le champ électromagnétique reçu par le réseau antennaire induit un signal de tension aux bornes du circuit d'adaptation de chaque élément antennaire.

Ce signal de tension est composé de la somme d'un signal direct et de plusieurs signaux indirects.

Le signal direct est le signal de tension induit aux bornes du circuit d'adaptation d'un élément rayonnant par le champ électromagnétique au voisinage immédiat de cet élément.

Les signaux indirects sont les signaux de tension induits aux bornes du circuit d'adaptation d'un élément rayonnant par les champs électromagnétiques aux voisinages immédiats des autres éléments antennaires du réseau.

Lorsque la distance entre les éléments antennaires est faible, les signaux indirects ne sont pas négligeables.

Le signal x'$_{n0}$(t) prélevé en sortie d'un élément d'index n$_0$ du réseau antennaire résulte donc à la fois du signal reçu x$_{n0}$(t) en entrée de cet élément mais aussi des signaux reçus x$_n$(t) en entrée des autres éléments du réseau.

Le signal d'entrée x$_n$(t + n.Δt) correspondant à une source émettrice, prélevé sur l'élément antennaire n à la n-ieme commutation de durée Δt, peut ainsi être modélisé à l'aide de la relation générale suivante :

$$x_n(t + n.\Delta T) = \rho_n.e^{j\varphi_n}.S(t + n.\Delta T - \tau) + b_n(t + n.\Delta T)$$

S étant le signal émis par la source, ρ$_n$, φ$_n$ et τ$_n$ les atténuation phase et retard induits par la propagation, b$_n$ le bruit reçu.

Le signal de sortie x'$_{n0}$(t + n$_0$.Δt) prélevé sur l'élément antennaire n$_0$ à la n$_0$-ieme commutation de durée Δt, peut ainsi être modélisé à l'aide de la relation générale suivante :

$$x'_{n_0}(t + n_0\Delta T) = \sum_{n=1}^{N} C_{n_0n}.x_n(t + n_0\Delta T - \tau_{n_0n}) \approx \sum_{n=1}^{N} C_{n_0n}.x_n(t + n_0\Delta T) \quad (1)$$

et, dans le cas d'une commutation rapide

$$\forall n_0, n = 1...N ; \quad x'_{n_0}(t + n_0\Delta T) \xrightarrow[N.\Delta T \ll Ts/2]{} x'_n(t) ;$$
$$x_n(t + n_0\Delta T) \xrightarrow[N.\Delta T \ll Ts/2]{} x_n(t) \quad (1\text{-bis})$$
$$\forall n_0 = 1...N ; \quad x'_{n_0} = \sum_{m=1}^{N} C_{nm}.x_m(t),$$

où

$\tau_{n_0 n}$    est le temps de propagation du signal entre les éléments antennaires d'index $n_0$ et n. Ce temps est considéré comme négligeable pour un signal de bande étroite $B_w$ pour le réseau antennaire, c'est à dire qui vérifie la relation $D.B_w/c \ll 1$ avec $B_w$ la bande du signal D le diamètre du réseau antennaire et $c=3.10^8$ m/s la célérité de la lumière dans le vide, ce qui est le cas systématiquement pour tous les signaux de communications et tous les réseaux antennaires de petite base considérés dans l'invention

$C_{n_0 n}$    est le coefficient de couplage entre les éléments antennaires d'index $n_0$ et n, qui traduit l'influence de chaque élément sur ses voisins.

Compte tenu des temps de commutations courts devant la durée symbole du fait de la condition $N.\Delta T \ll T_s/2$, le vecteur de signal en sortie du réseau antennaire X'(t), construit à partir des prélèvements de signal en sortie de chaque élément antennaire est efficacement approximé par la relation (2) suivante :

$$\underline{X}'(t) = \begin{bmatrix} x'_1(t+\Delta t) \\ ... \\ x'_N(t+N\Delta t) \end{bmatrix} \xrightarrow[N.\frac{2\Delta t}{T_s} \to 0]{} \begin{bmatrix} x'_1(t) \\ ... \\ x'_N(t) \end{bmatrix} = \begin{bmatrix} C_{11} & ... & C_{1N} \\ ... & .. & ... \\ C_{N1} & ... & C_{NN} \end{bmatrix} \begin{bmatrix} x_1(t) \\ ... \\ x_N(t) \end{bmatrix} = \underline{\underline{C}}.\underline{X}(t)$$

$$(2)$$

où

$\underline{X}(t)$ est le vecteur de signal en entrée du réseau antennaire, c'est-à-dire dont les composantes sont les signaux reçus, à un même instant t, à la surface de chaque élément du réseau, et émanant des sources émettrices,

$\underline{C}$ est la matrice de couplage des éléments antennaires du réseau. Le coefficient de la ligne i et de la colonne j de cette matrice est égal au coefficient de couplage entre l'élément antennaire d'index i et l'élément antennaire d'index j. La matrice $\underline{C}$ est de dimensions N par N.

L'expression du signal X'(t) en sortie du réseau antennaire donnée par la relation (2) permet ainsi de rendre l'observation du signal continue, quel que soit l'élément antennaire connecté à la voie de réception par le commutateur, en raison de la contribution induite par couplage par chacun des autres éléments du réseau antennaire.

Cette expression est à différencier de celles utilisées par les méthodes de l'art antérieur qui n'exploitent pas le couplage mutuel entre éléments du réseau.

La matrice de couplage du réseau antennaire peut être obtenue en mesurant la tension aux bornes du circuit d'adaptation de chaque élément antennaire, à l'aide, par exemple, d'un analyseur de réseau, ou par toute autre méthode équivalente. Pour déterminer chaque coefficient de couplage mutuel entre deux éléments antennaires, une tension est imposée ou un courant est injecté aux bornes du circuit du premier élément antennaire tout en mesurant la tension ou le courant aux bornes du circuit du second élément antennaire. Cette opération est réitérée pour chaque paire d'éléments rayonnants pris deux à deux parmi les N éléments du réseau d'antennes.

La matrice de couplage C est préalablement déterminée et stockée dans la base de données du système selon l'invention 100.

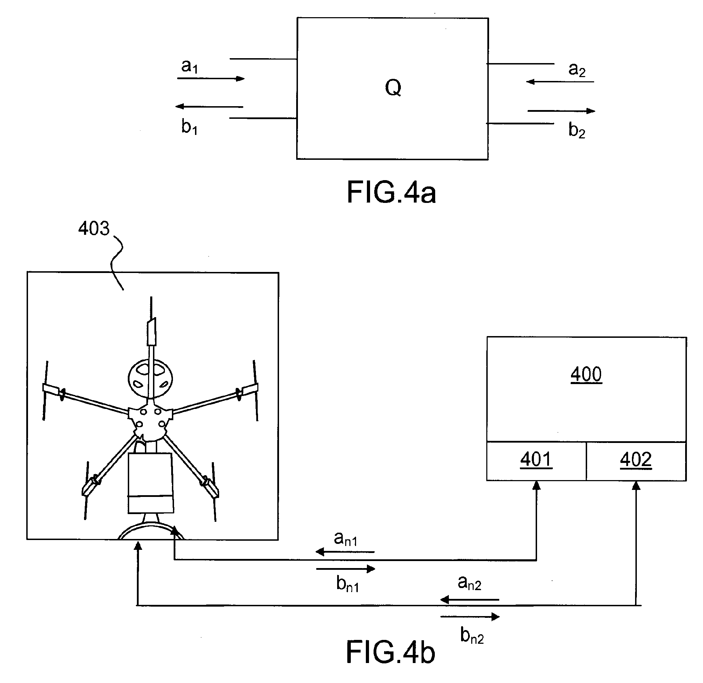

La figure 4a schématise le principe de caractérisation d'un quadripôle Q.

Le coefficient de couplage $C_{11}$ par réflexion en entrée du quadripôle Q est déterminé par le rapport entre le signal $b_1$ réfléchi au port 1 du quadripôle et le signal $a_1$ incident au port 1, étant supposé qu'aucun signal n'est injecté au port 2 (i.e. $a_2=0$).

Le coefficient de couplage $C_{22}$ par réflexion en sortie du quadripôle Q est déterminé par le rapport entre le signal $b_2$ réfléchi au port 2 du quadripôle et le signal $a_2$ incident au port 2, étant supposé qu'aucun signal n'est injecté au port 1 (i.e. $a_1=0$).

Le coefficient de couplage $C_{21}$ par transmission en entrée du quadripôle Q est déterminé par le rapport entre le signal $b_2$ transmis au port 2 du quadripôle et le signal $a_1$ incident au port 1, étant supposé qu'aucun signal n'est injecté au port 2 (i.e. $a_2=0$).

Le coefficient de couplage $C_{12}$ par transmission en sortie du quadripôle Q est déterminé par le rapport entre le signal $b_1$ transmis au port 1 du quadripôle et le signal $a_2$ incident au port 2, étant supposé qu'aucun signal n'est injecté au port 1 (i.e. $a_1=0$).

A partir de ces principes, il est possible de déterminer les coefficients de couplage mutuel entre éléments antennaires d'un réseau.

La figure 4b illustre un exemple de mise en oeuvre du calcul de la matrice de couplage d'un réseau antennaire 403 comportant 5 antennes élémentaires.

Un analyseur vectoriel de réseau 400 est utilisé pour mesurer les coefficients de couplage entre chaque paire d'éléments $(n_1, n_2)$ du réseau. 403.

L'analyseur 400 comporte deux ports 401,402. Le premier port 401 est relié aux bornes du premier élément antennaire $n_1$. Le second port 402 est relié aux bornes du second élément antennaire $n_2$. Pour mesurer le coefficient de couplage $C_{12}$ mutuel entre le premier et le second élément antennaire, un signal de référence $a_{n1}$ est injecté depuis le port 401 vers le premier élément antennaire $n_1$. En réponse à ce signal, un premier signal $b_{n1}$ est réfléchi vers le port 401 et un second signal $b_{n2}$ est transmis vers le port 402. Le coefficient de couplage mutuel $C_{21}$ est mesuré comme le rapport entre le signal $b_{n2}$ transmis vers le port 402 et le signal de référence injecté $a_{n1}$ depuis le port 401, étant supposé qu'aucun signal n'est injecté au port 402 (i.e. $a_{n2}=0$) Le coefficient de couplage $C_{11}$ du premier élément antennaire $n_1$ seul est mesuré comme le rapport entre le signal $b_{n1}$ réfléchi vers le port 401 et le signal injecté $a_{n1}$ et le premier signal, étant toujours supposé qu'aucun signal n'est injecté au port 402 (i.e. $a_{n2}=0$).

De façon similaire, pour mesurer les coefficients de couplage mutuel réciproque $C_{12}$, et $C_{22}$ entre les deux éléments antennaires $n_1$, $n_2$, un signal de référence $a_{n2}$ est injecté à partir du second port 402 aux bornes du second élément antennaire $n_2$, étant supposé qu'aucun signal n'est injecté au port 401 (i.e. $a_{n1}=0$).

Cette opération est réitérée pour chaque paire $(n_1, n_2)$ n1≠n2 d'éléments antennaires afin de calculer l'ensemble des coefficients de couplage qui composent la matrice de couplage C.

Afin d'améliorer le processus, les mesures réalisées par l'analyseur de réseau 400 peuvent être préalablement précédées d'une calibration dudit analyseur de réseau pour compenser l'influence des erreurs qui peuvent être liées à la source générant le signal de référence, à la réponse en fréquence de l'analyseur ou encore au couplage résiduel entre les deux ports 401, 402. Il est possible de la même manière d'exploiter la redondance des mesures de couplage, ou de réitérer ces opérations plusieurs fois pour améliorer la convergence statistique des mesures de couplage. Il est possible aussi de particulariser ces mesures à des bandes de fréquence spécifiques ou à des gammes de température et d'humidité spécifiques.

A partir de la relation (2) qui lie les signaux en entrée et en sortie du réseau antennaire, il est possible de reconstituer les estimateurs statistiques qui servent de support à la mise en oeuvre d'une méthode de séparation de sources, de radiogoniométrie ou plus généralement de détermination de la direction d'arrivée du signal reçu.

On décrit à présent plusieurs exemples d'estimateurs statistiques applicables au signal X reçu en entrée du réseau d'antennes. Un des objectifs de l'invention est de déterminer au moins un estimateur statistique du signal X à partir du même estimateur statistique calculé pour le signal X' échantillonné en sortie du réseau d'antennes ainsi que de la matrice de couplage C. Sans sortir du cadre de l'invention, celle-ci s'applique de façon équivalente à tout autre estimateur d'un signal échantillonné spatialement utilisé par toute méthode de séparation de sources ou de radiogoniométrie.

Considérant le vecteur signal X(t) complexe en entrée ou en sortie d'un réseau antennaire, $\underline{X}(t) = \begin{bmatrix} x_1(t) \\ ... \\ x_N(t) \end{bmatrix}$,

échantillonné à la période d'échantillonnage $T_e$, et définissant de ce fait la suite temporelle $\underline{X}(kT_e) = \begin{bmatrix} x_1(kT_e) \\ ... \\ x_N(kT_e) \end{bmatrix}$;

k = -∞, +∞, les statistiques du signal principalement utilisées dans les méthodes de séparation de source et de goniométrie connues sont les suivantes.

Le moment d'ordre 1 ou moyenne probabiliste $E[X(t_0)]$ du signal X. Il est estimé par une moyenne temporelle des échantillons du signal X, prise sur un horizon temporel de K échantillons à partir de l'échantillon d'indice $k_0$ correspondant à l'instant $t=k_0 Te$ selon la formulation suivante :

$$\underline{M}_{1,[\underline{X}(k_0)]} = \frac{1}{K} \cdot \sum_{n=1}^{K} \underline{X}\left((k_0 + k)T_e\right)$$

Les premier et second moments d'ordre 2 du signal X, définis par les expressions $E[X(t_0).X^H(t_1)]$ et $E[X(t_0).X^T(t_1)]$, où $E[X]$ est l'espérance du signal X, $X^T$ est le vecteur transposé de X et $X^H$ est le vecteur transposé conjugué de X. Ce sont en toute généralité des tenseurs symétriques d'ordre 2, estimés par des moyennes temporelles sur les échantillons de X, prises sur des horizons temporels de K échantillons à partir des échantillons d'indices $k_0$ et $k_1$ correspondant aux instants $t_0=k_0T_e$ et $t_1=k_1T_e$ selon les formulations suivantes :

$$\underline{\underline{M}}_{2\ [\underline{X}(k_0);\underline{X}(k1)]}^{(1)} = \frac{1}{K}\sum_{k=1}^{K}\underline{X}((k_0+k)T_e).[\underline{X}((k_1+k)T_e)]^H$$

et

$$\underline{\underline{M}}_{2\ [\underline{X}(k_0);\underline{X}(k1)]}^{(2)} = \frac{1}{K}\sum_{k=1}^{K}\underline{X}((k_0+k)T_e).[\underline{X}((k_1+k)T_e)]^T$$

Les covariances du signal X définies par les expressions $E[(X(t_0)-E[X(t_0)]).(X(t_1)-E[X(t_1)]^H)]$ et $E[(X(t_0)-E[X(t_0)]).(X(t_1)-E[X(t_1)]^T)]$. Ce sont également des tenseurs symétriques d'ordre 2, estimés par des moyennes temporelles sur les échantillons du signal X, prises sur des horizons temporels de K échantillons à partir des les échantillons $k_0$ et $k_1$ correspondant aux instants $t_0=k_0T_e$ et $t_1=k_1T_e$ selon les formulations suivantes :

$$\underline{\underline{R}}_{[\underline{X}(k_0);\underline{X}(k1)]}^{(1)} = \frac{1}{K}\sum_{k=1}^{K}\left[\underline{X}((k_0+k)T_e)-\underline{M}_{1\ [\underline{X}(k_0)]}\right].\left[[\underline{X}((k_1+k)T_e)]-\underline{M}_{1\ [\underline{X}(k_1)]}\right]^H$$

et

$$\underline{\underline{R}}_{[\underline{X}(k_0);\underline{X}(k1)]}^{(2)} = \frac{1}{K}\sum_{k=1}^{K}\left[\underline{X}((k_0+k)T_e)-\underline{M}_{1\ [\underline{X}(k_0)]}\right].\left[[\underline{X}((k_1+k)T_e)]-\underline{M}_{1\ [\underline{X}(k_1)]}\right]^T$$

Plus généralement, on peut définir les tenseurs moments et cumulants statistiques à tout ordre Q de la façon suivante.

Pour les variables aléatoires définies par le signal complexe reçu sur les différentes antennes $X_{i1}$ $X_{iQ}$ ; $i_1,...i_Q \in \{1,...,N\}$ prises aux instants $k_0T_e$, $k_1T_e$, $k_2T_e$, ... , $k_{Q-1}T_e$ $k_0,...,k_{Q-1} \in \{\infty, ... , \infty\}$, et pour des indices de conjugaison *0, *1, *2, ..., *Q-1, les produits retardés d'ordre Q et d'indices de conjugaison *0, *1, *2, ..., *Q-1 s'écrivent avec ces conventions :

$$x_{i_0}^{(*_0)}(k_0.T_e)\ x_{i_1}^{(*_1)}(k_1.T_e)\ ...\ x_{i_{Q-1}}^{(*_{Q-1})}(k_{Q-1}.T_e)$$

Les conventions d'écriture suivantes sont choisies pour les indices de conjugaison : si q = " $x_q^{()} = x_q$ ; *q ='*' $x_q^{(*q)} = x_q^*$).

La moyenne de ce produit constitue le moment scalaire d'ordre Q des variables $X_{i0}$ ... $X_{iQ-1}$ définit par les indices *0, *1, *2, ..., *Q-1.

$$M_{P,\left[x_{i_0}(k_0 T_e); x_{i_1}(k_1 T_e);...; x_{i_Q}(k_{Q-1} T_e)\right]}^{(*_0, *_1, *_2,...,*_{Q-1})} = E\left[x_{i_0}^{(*_0)}(k_0.T_e)\ x_{i_1}^{(*_1)}(k_1.T_e)\ ...\ x_{i_{Q-1}}^{(*_{Q-1})}(k_{Q-1}.T_e)\right]$$

Considérant les vecteurs signaux en entrée, les produits retardés d'ordre Q et de conjugaison *0 , *1 , *2 , ..., *Q-1 définissent un « tenseur des produits retardés d'ordre Q » qui s'exprime formellement en fonction des vecteurs signaux retardés sous la forme suivante :

$$\left[X \otimes X \otimes ... \otimes X\right]_{(k_0.T, k_1.T_e,...,k_{Q-1}.T_e)}^{(*_0, *_1, *_2,...,*_{Q-1})}$$
$$= \left[x_{i_0}^{(*_0)}(k_0.T_e) x_{i_1}^{(*_1)}(k_1.T_e)\ ...\ x_{i_Q}^{(*_{Q-1})}(k_{Q-1}.T_e)\right]_{\substack{i_0=1,...,N \\ i_1=1,...,N \\ ... \\ i_{Q-1}=1,...,N}}$$

Lorsqu'il n'y a pas de retards ($k_0 = k_1 = ... = k_{Q-1}$), ce tenseur définit une Q-puissance tensorielle du vecteur signal X.

La moyenne de ce tenseur produit constitue le tenseur des moments retardés d'ordre Q de taille N définit par les conjugaisons *0, *1, *2 ,..., *Q-1, qui s'exprime formellement à l'aide de la relation suivante :

$$M_{Q,\left[X(k_0); X(k_1);...; X(k_{Q-1})\right]}^{(*_0, *_1, *_2,...,*_{P-1})} = E\left[\left[X \otimes X \otimes ... \otimes X\right]_{(k_0.T, k_1.T_e,...,k_{Q-1}.T_e)}^{(*_0, *_1, *_2,...,*_{Q-1})}\right]$$
$$= \left[E\left[x_{i_0}^{(*_0)}(k_0.T_e) x_{i_1}^{(*_1)}(k_1.T_e)\ ...\ x_{i_P}^{(*_{Q-1})}(k_{Q-1}.T_e)\right]\right]_{\substack{i_0=1,...,N \\ i_1=1,...,N \\ ... \\ i_{Q-1}=1,...,N}}$$

Lorsqu'il n'y a pas de retard ($k_0 = k_1 = ... = k_{Q-1}$), on utilisera la notation simplifiée suivante :

$$M_{Q,\left[X(k_0); X(k_0);...; X(k_0)\right]}^{(*_0, *_1, *_2,...,*_{Q-1})} = M_{Q,\left[X(k_0)\right]}^{(*_0, *_1, *_2,...,*_{Q-1})}$$

En combinant les différents produits retardés et moments scalaires d'ordre q≤Q, on définit les cumulants scalaires du signal par les indices de conjugaison *0 , *1 , *2, ...,*Q-1 et par les formulations de Leonov et Shiryayev suivantes bien connues de l'homme de l'art.

Les cumulants scalaires d'ordre Q sont exprimés en fonction des moments scalaires d'ordre inférieur à l'aide de la relation suivante :

$$Cum_{Q,[x_{i_0}(k_0 T_e); \, x_{i_1}(k_1 T_e);...; x_{i_P}(k_2 T_e)]}^{(*_0,*_1,*_2,...,*_{Q-1})}$$

$$= \sum_{q=1}^{Q}(-1)^q (q-1)! \sum_{\substack{q-partitions \\ S_1,...,S_q \, de\{1,...N\} \\ \bigcup_{q=1}^{Q} S_q = \{1,...,N\}}} E\left[\left(\prod_{q_1 \in S_1} x_{i_{q_1}}^{(*_{q_1})}(k_{q_1} T_e)\right)\left(\prod_{q_2 \in S_2} x_{i_{q_2}}^{(*_{q_2})}(k_{q_2} T_e)\right)...\left(\prod_{q_q \in S_q} x_{i_{q_q}}^{(*_{q_q})}(k_{q_q} T_e)\right)\right]$$

Les moments scalaires d'ordre Q sont exprimés en fonction des cumulants scalaires d'ordre inférieur à l'aide de la relation suivante :

$$M_{Q,[x_{i_0}(k_0 T_e); \, x_{i_1}(k_1 T_e);...; x_{i_P}(k_2 T_e)]}^{(*_0,*_1,*_2,...,*_{Q-1})}$$

$$= \sum_{\substack{q-partitions \\ S_1,...,S_q \, de\{1,...N\} \\ \bigcup_{q'=1}^{Q} S_{q'} = \{1,...,N\}}} \left(\prod_{q'=1}^{q} Cum_{card(S_{q'}),[x_{i_{q''}}(k_{q''} T_e); \, q'' \in S_{q'}]}^{(*_0,*_1,*_2,...,*_{card(S_{q'})-1})}\right)$$

Cette formulation définit comme précédemment un tenseur des cumulants d'ordre Q, de taille N, qui s'exprime formellement à l'aide de la relation suivante :

$$\underline{\underline{Cum_{Q,[X(k_0); \, X(k_1);...; X(k_{Q-1})]}^{(*_0,*_1,*_2,...,*_{Q-1})}}}$$

$$= \left[Cum_{P,[x_{i_0}(k_0 T_e); \, x_{i_1}(k_1 T_e);...; x_{i_Q}(k_{Q-1} T_e)]}^{(*_0,*_1,*_2,...,*_{Q-1})}\right]_{\substack{i_0=1,...,N \\ i_1=1,...,N \\ ... \\ i_Q=1,...,N}}$$

Lorsqu'il n'y a pas de retard ($k_0 = k_1 = ... = k_{Q-1}$), on utilisera la notation simplifiée suivante

$$Cum_{Q,[X(k_0);X(k_0);...;X(k_0)]}^{\left(*_0,*_1,*_2,...,*_{Q-1}\right)}$$

$$= Cum_{Q,[X(k_0)]}^{\left(*_0,*_1,*_2,...,*_{Q-1}\right)}$$

Tous les tenseurs décrits possèdent des propriétés de symétrie réelle et/ou hermitienne et sont représentables en pratique :

- aux ordres pairs par une matrice convenablement ordonnancée et symétrique de dimensions $N^{Q/2} \times N^{Q/2}$,
- à tout ordre par un vecteur colonne convenablement ordonnancé de dimension $N^Q \times 1$.

Les moments et cumulants ainsi définis sont avantageusement utilisés à l'ordre 1,2 ou 4 pour les applications visées par la présente invention.

A l'ordre 1 le moment et le cumulant sont égaux à la moyenne du signal représentée en écriture scalaire par l'expression :

$$\forall n = 1,...,N \quad ; \quad M_{1,[x_n]}^{(*)} = Cum_{1,[x_n]}^{(*)} = E\left[x_n^{(*)}\right]$$

et en écriture vectorielle par un tenseur d'ordre 1 :

$$M_{1,[\underline{x}]}^{(*)} = E\left[\underline{X}^{(*)}\right]$$

A l'ordre 2 les moments correspondent respectivement aux produits croisés du signal et les cumulants correspondent respectivement aux variances et covariances du signal.

Les moments d'ordre 2 sont représentés en écriture scalaire par les expressions :

$$\forall n_0, n_1 = 1,...,N \quad ;$$

$$M_2^{(1)}\left[x_{n_0};x_{n_1}\right] = M_2^{(,*)}\left[x_{n_0};x_{n_1}\right] = E\left[x_{n_0} x_{n_1}^*\right] \quad ;$$

$$M_2^{(2)}\left[x_{n_0};x_{n_1}\right] = M_2^{(,)}\left[x_{n_0};x_{n_1}\right] = E\left[x_{n_0} x_{n_1}\right]$$

et en écriture matricielle par un tenseur d'ordre 2 :

$$M_2^{(1)}[\underline{X}] = M_2^{(,*)}[\underline{X}] = E\left[\underline{XX^H}\right] \quad ;$$

$$M_2^{(2)}[\underline{X}] = M_2^{(,)}[\underline{X}] = E\left[\underline{XX^T}\right]$$

Les cumulants d'ordre 2 sont représentés en écriture scalaire par les expressions :

$$Cum_2^{(1)}[x_{n_0};x_{n_1}] = Cum_2^{(,*)}[x_{n_0};x_{n_1}] = E\left[(x_{n_0} - E[x_{n_0}])(x_{n_1} - E[x_{n_1}])^*\right] \quad ;$$

$$Cum_2^{(2)}[x_{n_0};x_{n_1}] = Cum_2^{(,)}[x_{n_0};x_{n_1}] = E\left[(x_{n_0} - E[x_{n_0}])(x_{n_1} - E[x_{n_1}])\right]$$

et en écriture matricielle par un tenseur d'ordre 2 :

$$Cum_2^{(1)}[\underline{X}] = Cum_2^{(,*)}[\underline{X}] = E\left[(X - E[X]).(X - E[X])^H\right];$$

$$Cum_2^{(2)}[\underline{X}] = Cum_2^{(,)}[\underline{X}] = E\left[(X - E[X]).(X - E[X])^T\right]$$

De façon similaire, on donne également les expressions des moments et cumulants d'ordre 4.

Les moments d'ordre 4 sont représentés en écriture scalaire par l'expression :

$$\forall n_0, n_1, n_2, n_3 = 1,...,N \quad ;$$

$$M_4^{(*_0,*_1,*_2,*_3)}[x_{n_0};x_{n_1};x_{n_2};x_{n_3}] = E\left[x_{n_0}^{(*_0)}x_{n_1}^{(*_1)}x_{n_2}^{(*_2)}x_{n_3}^{(*_3)}\right]$$

et en écriture tensorielle par l'expression:

$$M_4^{(*_0,*_1,*_2,*_3)}[\underline{X}] =$$

$$E\left[\underline{X}^{(*_0)} \otimes \underline{X}^{(*_1)} \otimes \underline{X}^{(*_2)} \otimes \underline{X}^{(*_3)}\right] = E\left[\left(\underline{X}^{(*_0)} \otimes (\underline{X}^{(*_1)})^H\right)\left(\underline{X}^{(*_2)} \otimes (\underline{X}^{(*_3)})^H\right)^H\right]$$

Les cumulants d'ordre 4 sont représentés en écriture scalaire par l'expression :

$$Cum_{4,}^{(*_0,*_1,*_2,*_3)}\left[x_{n_0};x_{n_1};x_{n_2};x_{n_3}\right]$$

$$= E\left[x_{n_0}^{(*_0)}x_{n_1}^{(*_1)}x_{n_2}^{(*_2)}x_{n_3}^{(*_3)}\right] - E\left[x_{n_0}^{(*_0)}x_{n_1}^{(*_1)}\right]E\left[x_{n_2}^{(*_2)}x_{n_3}^{(*_3)}\right]$$

$$- E\left[x_{n_0}^{(*_0)}x_{n_2}^{(*_2)}\right]E\left[x_{n_1}^{(*_1)}x_{n_3}^{(*_3)}\right] - E\left[x_{n_0}^{(*_0)}x_{n_3}^{(*_3)}\right]E\left[x_{n_1}^{(*_1)}x_{n_2}^{(*_2)}\right]$$

$$- E\left[x_{n_0}^{(*_0)}\right]E\left[x_{n_1}^{(*_1)}x_{n_2}^{(*_2)}x_{n_3}^{(*_3)}\right] - E\left[x_{n_1}^{(*_1)}\right]E\left[x_{n_0}^{(*_0)}x_{n_2}^{(*_2)}x_{n_3}^{(*_3)}\right]$$

$$- E\left[x_{n_2}^{(*_2)}\right]E\left[x_{n_1}^{(*_1)}x_{n_0}^{(*_0)}x_{n_3}^{(*_3)}\right] - E\left[x_{n_3}^{(*_3)}\right]E\left[x_{n_1}^{(*_1)}x_{n_2}^{(*_2)}x_{n_0}^{(*_0)}\right]$$

$$+ 2E\left[x_{n_0}^{(*_0)}x_{n_1}^{(*_1)}\right]E\left[x_{n_2}^{(*_2)}\right]E\left[x_{n_3}^{(*_3)}\right] + 2E\left[x_{n_0}^{(*_0)}x_{n_2}^{(*_2)}\right]E\left[x_{n_1}^{(*_1)}\right]E\left[x_{n_3}^{(*_3)}\right]$$

$$+ 2E\left[x_{n_0}^{(*_0)}x_{n_3}^{(*_3)}\right]E\left[x_{n_2}^{(*_2)}\right]E\left[x_{n_1}^{(*_1)}\right] + 2E\left[x_{n_1}^{(*_1)}x_{n_2}^{(*_2)}\right]E\left[x_{n_0}^{(*_0)}\right]E\left[x_{n_3}^{(*_3)}\right]$$

$$+ 2E\left[x_{n_1}^{(*_1)}x_{n_3}^{(*_3)}\right]E\left[x_{n_0}^{(*_0)}\right]E\left[x_{n_2}^{(*_2)}\right] + 2E\left[x_{n_2}^{(*_2)}x_{n_3}^{(*_3)}\right]E\left[x_{n_0}^{(*_0)}\right]E\left[x_{n_1}^{(*_1)}\right]$$

$$- 6.E\left[x_{n_0}^{(*_0)}\right]E\left[x_{n_1}^{(*_1)}\right]E\left[x_{n_2}^{(*_2)}\right]E\left[x_{n_3}^{(*_3)}\right]$$

et lorsque les signaux sont centrés l'expression se simplifie en :

$$Cum_{4,}^{(*_0,*_1,*_2,*_3)}\left[x_{n_0};x_{n_1};x_{n_2};x_{n_3}\right] =$$

$$E\left[x_{n_0}^{(*_0)}x_{n_1}^{(*_1)}x_{n_2}^{(*_2)}x_{n_3}^{(*_3)}\right] - E\left[x_{n_0}^{(*_0)}x_{n_1}^{(*_1)}\right]E\left[x_{n_2}^{(*_2)}x_{n_3}^{(*_3)}\right]$$

$$- E\left[x_{n_0}^{(*_0)}x_{n_2}^{(*_2)}\right]E\left[x_{n_1}^{(*_1)}x_{n_3}^{(*_3)}\right] - E\left[x_{n_0}^{(*_0)}x_{n_3}^{(*_3)}\right]E\left[x_{n_1}^{(*_1)}x_{n_2}^{(*_2)}\right]$$

En écriture tensorielle l'expression du cumulant d'ordre 4 est :

$$Cum_{4,[X]}^{(*_0,*_1,*_2,*_3)}$$

$$= E\left[\underline{X}^{(*_0)} \otimes \underline{X}^{(*_1)} \otimes \underline{X}^{(*_2)} \otimes \underline{X}^{(*_3)}\right] - E\left[\underline{X}^{(*_0)} \otimes \underline{X}^{(*_1)}\right] \otimes E\left[\underline{X}^{(*_2)} \otimes \underline{X}^{(*_3)}\right]$$

$$- E\left[\underline{X}^{(*_0)} \otimes \underline{X}^{(*_2)}\right] \otimes E\left[\underline{X}^{(*_1)} \otimes \underline{X}^{(*_3)}\right] - E\left[\underline{X}^{(*_0)} \otimes \underline{X}^{(*_3)}\right] E\left[\underline{X}^{(*_1)} \otimes \underline{X}^{(*_2)}\right]$$

$$- E\left[\underline{X}^{(*_0)}\right] \otimes E\left[\underline{X}^{(*_1)} \otimes \underline{X}^{(*_2)} \otimes \underline{X}^{(*_3)}\right] - E\left[\underline{X}^{(*_1)}\right] \otimes E\left[\underline{X}^{(*_0)} \otimes \underline{X}^{(*_2)} \otimes \underline{X}^{(*_3)}\right]$$

$$- E\left[\underline{X}^{(*_2)}\right] \otimes E\left[\underline{X}^{(*_1)} \otimes \underline{X}^{(*_0)} \otimes \underline{X}^{(*_3)}\right] - E\left[\underline{X}^{(*_3)}\right] \otimes E\left[\underline{X}^{(*_1)} \otimes \underline{X}^{(*_2)} \otimes \underline{X}^{(*_0)}\right]$$

$$+ 2E\left[\underline{X}^{(*_0)} \otimes \underline{X}^{(*_1)}\right] \otimes E\left[\underline{X}^{(*_2)}\right] \otimes E\left[\underline{X}^{(*_3)}\right]$$

$$+ 2E\left[\underline{X}^{(*_0)} \otimes \underline{X}^{(*_2)}\right] E\left[\underline{X}^{(*_2)}\right] \otimes E\left[\underline{X}^{(*_3)}\right] + 2E\left[\underline{X}^{(*_0)} \otimes \underline{X}^{(*_3)}\right] \otimes E\left[\underline{X}^{(*_2)}\right] \otimes E\left[\underline{X}^{(*_1)}\right]$$

$$+ 2E\left[\underline{X}^{(*_1)} \otimes \underline{X}^{(*_2)}\right] \otimes E\left[\underline{X}^{(*_0)}\right] \otimes E\left[\underline{X}^{(*_3)}\right]$$

$$+ 2E\left[\underline{X}^{(*_1)} \otimes \underline{X}^{(*_3)}\right] \otimes E\left[\underline{X}^{(*_0)}\right] \otimes E\left[\underline{X}^{(*_2)}\right] + 2E\left[\underline{X}^{(*_2)} \otimes \underline{X}^{(*_3)}\right] \otimes E\left[\underline{X}^{(*_0)}\right] \otimes E\left[\underline{X}^{(*_1)}\right]$$

$$- 6.E\left[\underline{X}^{(*_0)}\right] \otimes E\left[\underline{X}^{(*_1)}\right] \otimes E\left[\underline{X}^{(*_2)}\right] \otimes E\left[\underline{X}^{(*_3)}\right]$$

et lorsque les signaux sont centrés :

$$Cum_{4,[X]}^{(*_0,*_1,*_2,*_3)} =$$

$$E\left[\underline{X}^{(*_0)} \otimes \underline{X}^{(*_1)} \otimes \underline{X}^{(*_2)} \otimes \underline{X}^{(*_3)}\right] - E\left[\underline{X}^{(*_0)} \otimes \underline{X}^{(*_1)}\right] \otimes E\left[\underline{X}^{(*_2)} \otimes \underline{X}^{(*_3)}\right]$$

$$- E\left[\underline{X}^{(*_0)} \otimes \underline{X}^{(*_2)}\right] \otimes E\left[\underline{X}^{(*_1)} \otimes \underline{X}^{(*_3)}\right] - E\left[\underline{X}^{(*_0)} \otimes \underline{X}^{(*_3)}\right] E\left[\underline{X}^{(*_1)} \otimes \underline{X}^{(*_2)}\right]$$

La quadri-covariance est le tenseur d'ordre 4 le plus couramment utilisé dans les méthodes de séparation de source et de goniométries aux ordres supérieurs à 2. Elle correspond au cumulant d'ordre 4 défini par les indices de conjugaison 1 et 3.

Pour un signal scalaire complexe X centré et à retards nuls elle correspond au produit du coefficient d'applatissement (ou Kurtosis) par la variance, et vaut $Quad_x = E[|x|^4] - 2|E[|x|^2]|^2 - |E[x^2]|^2$. Pour un signal scalaire réel X centré et à retards nuls elle vaut $Quad_x = E[x^4] - 3(E[x^2])^2$.

Pour un vecteur signal complexe X centré et à retards nuls elle s'écrit sous la forme tensorielle

$$Quad_X = Cum_{4,X}(\,,^*,\,,^*) =$$

$$E[X \otimes X^* \otimes X \otimes X^*] - 2.E[X \otimes X^*] \otimes (E[X \otimes X^*]) - E[X \otimes X] \otimes (E[X^* \otimes X^*])$$

Pour un vecteur signal réel X centré et à retards nuls elle s'écrit sous la forme tensorielle $Quad_X = Cum_{4,X}(\,,^*,^*) = E[X \otimes X \otimes X \otimes X] - 3E[X \otimes X] \otimes (E[X \otimes X])$.

Si X est un signal Gaussien, alors Quadx = 0.

En pratique, sur des signaux convenablement échantillonnés à une fréquence d'échantillonnage $F_e = 1/T_e$ respectant la condition de Shannon, on estime ces tenseurs par des moyennes temporelles des produits d'ordre $q \leq Q$ du vecteur signal.

A l'ordre 1, pour construire la moyenne du vecteur signal, on estime la moyenne probabiliste de chaque composante du signal par une intégration en temps

$$n_0 = 1,...,N \; ; \; E\big[\mathrm{x}_{\mathrm{n}_0}\big(\mathrm{k}_0 T_e\big)\big] \; \approx \; \frac{1}{K} \cdot \sum_{n=1}^{K} x_{\mathrm{n}_0}\big((k_0 + k)T_e\big)$$

Les signaux de communications étant généralement centrés, la moyenne est à priori nulle.

A l'ordre 2, pour construire moments et covariances, on estime les produits d'ordre 2 de chaque composante du vecteur signal avec et sans conjugaison par une intégration en temps :

$$n_0, n_1 = 1,...,N \; ; \; E\big[\mathrm{x}_{\mathrm{n}_0}^{*0}\big(\mathrm{k}_0 T_e\big)\, \mathrm{x}_{\mathrm{n}_1}^{*1}\big(\mathrm{k}_1 T_e\big)\big] \; \approx \; \frac{1}{K}\sum_{k=1}^{K} \mathrm{x}_{\mathrm{n}_0}^{*0}\big((k_0+k)T_e\big)\cdot \mathrm{x}_{\mathrm{n}_1}^{*1}\big((k_1+k)T_e\big)$$

A l'ordre 3, on procède de même avec les produits d'ordre 3, avec et sans conjugaison, puis intégration en temps.

Les signaux de communications étant considérés comme centrés et équilibrés, les moments d'ordre 3 et cumulants sont généralement nuls.

A l'ordre 4, pour construire moments et quadri-covariances, on estime les moyennes, produits d'ordre deux et produits d'ordre 4 de chaque composante du vecteur signal avec et sans conjugaison par une intégration en temps :

$$n_0, n_1, n_2, n_3 = 1,...,N \; ; \; E\big[\mathrm{x}_{\mathrm{n}_0}^{*0}\big(\mathrm{k}_0 T_e\big)\mathrm{x}_{\mathrm{n}_1}^{*1}\big(\mathrm{k}_1 T_e\big)\mathrm{x}_{\mathrm{n}_2}^{*2}\big(\mathrm{k}_2 T_e\big)\, \mathrm{x}_{\mathrm{n}_3}^{*3}\big(\mathrm{k}_3 T_e\big)\big]$$

$$\approx \; \frac{1}{K}\sum_{k=1}^{K} \mathrm{x}_{\mathrm{n}_0}^{*0}\big((k_0+k)T_e\big)\cdot \mathrm{x}_{\mathrm{n}_1}^{*1}\big((k_1+k)T_e\big)\cdot \mathrm{x}_{\mathrm{n}_2}^{*2}\big((k_3+k)T_e\big)\cdot \mathrm{x}_{\mathrm{n}_3}^{*3}\big((k_3+k)T_e\big)$$

On procède de façon équivalente pour construire tout moment ou cumulant d'ordre supérieur à 4.

On décrit à présent les relations entre un estimateur statistique du signal X' en sortie du réseau antennaire et son équivalent pour le signal X en entrée du réseau antennaire. Ces relations font intervenir les coefficients de couplage entre éléments du réseau.

Les relations (1 bis) et (2) correspondent à une transformation linéaire du signal en entrée du réseau antennaire X en un signal en sortie du réseau antennaire X'=CX.

Les produits, moments et cumulants du signal X subissent alors les transformations multilinéaires suivantes.

Les produits d'ordre Q des signaux reçus X avec ou sans conjugaison (notée (*) par convention) sont liés aux produits d'ordre Q des signaux X' par la relation :

$$\mathrm{x}_{\mathrm{n}_0}^{'(*_0)}\cdot\mathrm{x}_{\mathrm{n}_1}^{'(*_1)}...\mathrm{x}_{\mathrm{n}_{Q\text{-}1}}^{'(*Q)} \; = \; \sum_{\substack{m_0=1 \\ m_1=1 \\ ... \\ m_{Q-1}=1}}^{N}\Big(\mathrm{C}_{\mathrm{n}_0\mathrm{m}_0}^{(*_0)}\cdot\mathrm{C}_{\mathrm{n}_1\mathrm{m}_1}^{(*_1)}...\mathrm{C}_{\mathrm{n}_{P\text{-}1}\mathrm{m}_{Q\text{-}1}}^{(*_{P\text{-}1})}\Big)\cdot\Big(\mathrm{x}_{\mathrm{m}_0}^{(*_0)}\cdot\mathrm{x}_{\mathrm{m}_1}^{(*_1)}...\mathrm{x}_{\mathrm{m}_{Q\text{-}1}}^{(*_{Q\text{-}1})}\Big)$$

De même, les moments d'ordre Q du signal X' s'écrivent :

$$M_{Q,\big[\mathrm{x}_{\mathrm{n}_0}';\mathrm{x}_{\mathrm{n}_1}';...;\mathrm{x}_{\mathrm{n}_{Q\text{-}1}}'\big]}^{(*_0,*_1,*_2,...,*_{Q\text{-}1})} \; = \; \sum_{\substack{m_0=1 \\ m_1=1 \\ ... \\ m_{Q-1}=1}}^{N}\Big(\mathrm{C}_{\mathrm{n}_0\mathrm{m}_0}^{(*_0)}\cdot\mathrm{C}_{\mathrm{n}_1\mathrm{m}_1}^{(*_1)}...\mathrm{C}_{\mathrm{n}_{Q\text{-}1}\mathrm{m}_{Q\text{-}1}}^{(*_{Q\text{-}1})}\Big).M_{Q,\big[\mathrm{x}_{\mathrm{m}_0};\mathrm{x}_{\mathrm{m}_1};...;\mathrm{x}_{\mathrm{m}_{Q\text{-}1}}\big]}^{(*_0,*_1,*_2,...,*_{Q\text{-}1})}$$

et les cumulants d'ordre Q :

$$
Cum_{Q,\left[x'_{n_0};x'_{n_1};...;x'_{nQ-1}\right]}^{\left(*_0,*_1,*_2,...,*_{Q-1}\right)} \quad = \sum_{\substack{m_0=1\\m_1=1\\...\\m_{P-1}=1}}^{N} \left(C_{n_0m_0}^{(*_0)}.C_{n_1m_1}^{(*_1)}...C_{n_{Q-1}m_{Q-1}}^{(*_{Q-1})}\right).Cum_{Q,\left[x_{m_0};x_{m_1};...;x_{mQ-1}\right]}^{\left(*_0,*_1,*_2,...,*_{Q-1}\right)}
$$

Toutes les formulations ci-dessus s'écrivent sous des formes tensorielles condensées, dans lesquelles l'opérateur linéaire de la transformation par couplage du signal d'entrée X de réseau antennaire en signal de sortie X' (transformation $\underline{x}'=\underline{c}.\underline{x}$ , opérateur $\underline{C}$), est considéré comme un tenseur d'ordre 2. A l'ordre statistique Q, les auto-produits tensoriels d'ordre Q de ce tenseur $\underline{C}$ d'ordre 2, notés formellement $\underline{C}^{(Q)}$, définissent des tenseurs d'ordre 2Q (qui peuvent être vus comme des matrices de dimensions ($N^Q$ x$N^Q$) convenablement ordonnancées) ;ces auto-produits tensoriels d'ordre Q opèrent sur des tenseurs d'ordre Q (qui peuvent être vus comme des vecteurs de taille $N^Q$x1 convenablement ordonnancés).
Ces opérations tensorielles s'écrivent selon les relations formelles suivantes :

-   la Q-puissance tensorielle de X' en fonction de celle de X

$$
\left[X'\otimes X'\otimes...\otimes X'\right]^{\left(*_0,*_1,*_2,...,*_{Q-1}\right)} =
$$

$$
\left[\left[C\otimes C\otimes...\otimes C\right]\right]^{\left(*_0,*_1,*_2,...,*_{Q-1}\right)} . \left[X\otimes X\otimes...\otimes X\right]^{\left(*_0,*_1,*_2,...,*_{Q-1}\right)}
$$

-   expression des moments d'ordre Q de X', en fonction de ceux de X

$$
M_{Q,X'}^{\left(*_0,*_1,*_2,...,*_{Q-1}\right)}
$$

$$
= \left[\left[C\otimes C\otimes...\otimes C\right]\right]^{\left(*_0,*_1,*_2,...,*_{Q-1}\right)} . M_{Q,X}^{\left(*_0,*_1,*_2,...,*_{Q-1}\right)}
$$

-   expression des cumulants d'ordre Q de X' en fonction de ceux de X

$$
Cum_{Q,X'}^{\left(*_0,*_1,*_2,...,*_{Q-1}\right)}
$$

$$
= \left[\left[C\otimes C\otimes...\otimes C\right]\right]^{\left(*_0,*_1,*_2,...,*_{Q-1}\right)} . Cum_{Q,X}^{\left(*_0,*_1,*_2,...,*_{Q-1}\right)}
$$

De façon générale, l'équation reliant un estimateur statistique d'ordre Q du signal de sortie X', noté $M_{Q,X'}^{(Q)}$ ,

à l'estimateur statistique d'ordre Q correspondant du signal d'entrée X, noté $M_{Q,X}^{(Q)}$ , est :

$$M_{Q,X'}^{(Q)} =$$

$$\underline{\underline{\underline{\left[\!\left[C \otimes C \otimes ... \otimes C\right]\!\right]}}}^{\left(*_0,*_1,*_2,...,*_{Q-1}\right)} . M_{Q,X}^{(Q)}$$

$$= C^{(Q)} . M_{Q,X}^{(Q)} \qquad\qquad (3)$$

où $C^{(Q)}$ est la notation formelle de l'auto-produit tensoriel d'ordre Q de la matrice de couplage C du réseau d'antennes, Q étant l'ordre du moment ou cumulant que représentent les estimateurs statistiques $M_{Q,X}^{(Q)}$ et $M_{Q,X'}^{(Q)}$.

Par exemple, la covariance du signal de sortie X', qui est un moment d'ordre 2, est liée à la covariance du signal d'entrée X par la relation (4) :

$$\underline{\underline{R_{X'}}} = \underline{\underline{C \otimes C^{(*)}}} . \underline{\underline{R_X}} \quad (4)$$

où $\underline{\underline{C \otimes C^{(*)}}}$ est le produit tensoriel de la matrice de couplage par son conjugué représenté par une matrice de dimension $N^2$ par $N^2$.

où $\underline{R_{x'}}, \underline{R_x}$ sont des tenseurs d'ordre 2 représentés par des vecteurs de dimension $N^2$ ou par des matrices de dimension N par N.

Le procédé selon l'invention est à présent décrit pour l'exemple particulier de détermination de la covariance du signal à localiser. Le procédé s'applique de façon similaire pour les autres estimateurs statistiques décrits ou leurs équivalents.

Grâce à la prise en compte des coefficients de couplage entre éléments antennaires, chaque prélèvement de signal $x'_n$ par le commutateur contient la contribution du signal d'entrée sur l'élément antennaire d'index pondéré par l'impédance propre de cet élément, et la contribution des autres éléments antennaires, au même instant, pondérées par le coefficient de couplage associé. L'observation du signal est ainsi rendue continue dans la mesure où les éléments antennaires auxquels n'est pas connecté le commutateur contribuent indirectement au signal reçu via le couplage antennaire.

Les estimateurs statistiques du signal X', par exemple sa covariance, apparaissent comme des combinaisons linéaires des estimateurs statistiques du signal X, considéré à tous les instants, pas seulement aux instants de prises de réception par le commutateur.

Le procédé selon l'invention consiste ainsi en l'exécution des étapes suivantes.

Le vecteur signal X' est prélevé par le commutateur 102 en sortie du réseau antennaire 101 avec une vitesse de commutation suffisamment rapide par rapport à la vitesse de modulation du signal reçu.

Le vecteur signal X' est numérisé à une fréquence d'échantillonnage $F_e$ donnée puis intégré sur une durée d'observation prédéterminée.

La covariance $R_X'$ du signal X' est calculée puis la covariance $R_X$ du signal X en entrée du réseau d'antennes est déterminée en résolvant le système d'équations (4) à partir de la matrice de couplage C du réseau antennaire préalablement déterminée et mémorisée.

Une méthode de radiogoniométrie ou une méthode de séparation de sources est appliquée à la matrice de covariance $R_X$ pour déterminer le nombre de sources et/ou leur direction d'arrivée. Préalablement ou alternativement, une méthode de séparation de sources ou d'identification des vecteurs directeurs de sources peut également être appliquée.

Pour améliorer les performances du procédé, un prélèvement, par le commutateur, des échantillons de signaux au milieu des intervalles de commutation, comme illustré à la figure 2 est préféré de sorte à éviter un prélèvement pendant le régime transitoire des circuits de commande du commutateur.

Dans une variante de réalisation de l'invention, les performances du procédé peuvent être améliorées en supposant connue la modulation du signal S reçu et plus précisément la fonction d'auto-corrélation $r_s(\tau)$ de la modulation du signal S.

Le terme $r_s(\tau)$ intervient comme un terme correctif dans la relation (4) qui permet de relier les covariances des signaux X et X'. Partant de l'expression générale (1), la relation (4) est modifiée pour arriver à la relation (6).

$$\underline{\underline{R_{X'}}} = \underline{\underline{C \otimes C^{(*)}}}.[\underline{r_S} \ \& \ \underline{\underline{R_X}}] \qquad (6)$$

L'opérateur & désigne le produit terme à terme des tenseurs d'ordre 2 $r_s$ et $R_X$. Plus précisément, la composante d'indice (i-1)N +j du tenseur $\underline{r_s}$ est égale à la fonction d'auto-corrélation $r_s((j-i).\Delta t)$ du signal S(t) émis retardé du retard (j-i).$\Delta$t.

Les composantes du tenseur $\underline{r_s}$ peuvent être précalculées pour tous les retards 0, $\Delta$t,... N.$\Delta$t, lorsque l'information sur la modulation du signal émis S(t) est disponible.

Dans cette variante de l'invention, le procédé comporte ainsi une étape supplémentaire qui consiste, après avoir calculé la covariance $R_X$ du signal X à l'aide de la relation (4) à compenser chacune de ses composantes en la divisant par les valeurs retardées de la fonction d'auto-corrélation $r_s$ du signal modulé émis S(t).

Cette étape supplémentaire permet d'améliorer les performances mais n'est pas essentielle à la mise en oeuvre du procédé dans la mesure où les échantillons du vecteur signal X' appartiennent à un même symbole du signal reçu. Cette exigence est remplie si le temps de commutation At est inférieur au rapport entre la demi-durée d'un symbole $T_S/2$ du signal source convenablement filtré et le nombre d'éléments antennaires N.

La modulation du signal S peut être estimée par des moyens externes à l'invention intervenant en préambule ou peut être connue lorsque la nature même du signal dont on souhaite estimer la direction d'arrivée est connue.

Dans le cas où un estimateur d'ordre 4 est utilisé, par exemple la quadricovariance ou un cumulant d'ordre 4, la relation (6) devient :

$$\underline{\underline{Quad_{X'}}} = [\underline{\underline{C \otimes C^{(*)} \otimes C \otimes C^{(*)}}}].[[\underline{q_S} \ \& \ \underline{\underline{Quad_X}}]]$$

avec $q_s$ la fonction de quadri-covariance retardée du signal source S , dont la modulation est supposée connue, représentée par l'expression :

$$q_s(\tau_1,\tau_2,\tau_3) = E[s_{(t)} \ s_{(t+\tau1)}^* s_{(t+\tau2)} \ s_{(t+\tau3)}^*] - E[s_{(t)} \ s_{(t+\tau1)}^*]E[s_{(t+\tau2)}s_{(t+\tau3)}^*] - E[s_{(t)}$$
$$s_{(t+\tau2)}]E[s_{(t+\tau1)}^* s_{(t+\tau3)}^*] - E[s_{(t)} \ s_{(t+\tau3)}^*]E[s_{(t+\tau1)}^* s_{(t+\tau2)}^*])$$

La fonction de quadri-covariance $q_s$ peut être prédéterminée de la même façon que la fonction d'auto-corrélation $r_s$, pour tous les jeux de retards 0, $\Delta$t,...,N$\Delta$t lorsque l'information sur la modulation du signal S est disponible ou déterminée au préalable par analyse.

Le procédé selon l'invention permet de restituer les estimateurs statistiques du signal X d'entrée du réseau d'antenne qui sont ensuite utilisés pour mettre en oeuvre une méthode de goniométrie ou de séparation de sources.

On décrit à présent les utilisations possibles des statistiques précédemment décrites en traitement de signal et traitement d'antennes.

Toute l'information sur le signal est contenue dans la série de ses moments qui apparaissent comme les coefficients du développement en série de la première fonction caractéristique de distribution de probabilité du vecteur signal aléatoire X (à l'instant t omis par simplification dans les formules qui suivent)

$$X = \begin{pmatrix} x_1 \\ ... \\ x_N \end{pmatrix}; U = \begin{pmatrix} u_1 \\ ... \\ u_N \end{pmatrix} \in C^N; \Phi_X(U) \in C$$

$$\Phi_X(U) = E\left[\exp\left(i\,\mathrm{Re}\left\{U^H.X\right\}\right)\right]$$

$$= 1 + \sum_{\substack{q=1 \\ i_1,\dots,i_N=1,\dots,N \\ i_1+i_2+\dots+i_N=q}}^{\infty} \sum_{i_1,\dots,i_N=1,\dots,N}^{\infty} \frac{j^q}{i_1!i_2!\dots i_N!}\left[\mathrm{Re}\left\{\sum_{\substack{combinaisons \\ *_0,*_1,\dots,*_{q-1}}} E\left[x_{i_0}^{(*_0)}x_{i_1}^{(*_1)}\dots x_{i_q}^{(*_{q-1})}\right]u_{i_0}^{(*_0)}u_{i_1}^{(*_1)}\dots u_{i_q}^{(*_{q-1})}\right\}\right]$$

$$\Phi_X(U) = 1 + \sum_{\substack{Q=1 \\ combinaisons \\ *_0,*_1,\dots,*_{Q-1}}}^{\infty} \sum \mathrm{Re}\left\{\left(\underline{\underline{M_{Q,[x]}^{(*_0,*_1,*_2,\dots,*_{Q-1})}}}\right).U\right\}$$

Toute l'information sur le signal est aussi contenue dans la série de ses cumulants qui apparaissent comme les coefficients du développement en série de la seconde fonction caractéristique de distribution de probabilité de la variable aléatoire signal X

$$U \in C^N; \ \Psi_X(U) \in C$$

$$\Psi_X(U) = Log\left(E\left[\exp\left(j\,\mathrm{Re}\left\{U^H.X\right\}\right)\right]\right)$$

$$= 1 + \sum_{\substack{q=1 \\ i_1,\dots,i_N=1,\dots,N \\ i_1+i_2+\dots+i_N=q}}^{\infty} \sum_{i_1,\dots,i_N=1,\dots,N}^{\infty} \frac{j^q}{i_1!i_2!\dots i_N!}\left[\mathrm{Re}\left\{\sum_{\substack{combinaisons \\ *_0,*_1,\dots,*_{q-1}}} Cum\left[x_{i_0}^{(*_0)}x_{i_1}^{(*_1)}\dots x_{i_{q-1}}^{(*_{q-1})}\right]u_{i_0}^{(*_0)}u_{i_1}^{(*_1)}\dots u_{i_{q-1}}^{(*_{q-1})}\right\}\right]$$

$$\Psi_X(U) = 1 + \sum_{\substack{Q=1 \\ combinaisons \\ *_0,*_1,\dots,*_{Q-1}}}^{\infty} \sum \frac{j^Q}{i_1!i_2!\dots i_N!}.\mathrm{Re}\left\{\left(\underline{\underline{Cum_{Q,[x]}^{(*_0,*_1,*_2,\dots,*_{Q-1})}}}\right).U\right\}$$

Ainsi, connaitre la série des moments ou la série des cumulants du signal en entrée d'un réseau antennaire permet de caractériser complètement le processus statistique « vecteur signal en entrée X ».

Lorsque le vecteur signal en entrée est réel, la première fonction caractéristique est déterminée à l'ordre Q par un seul tenseur des moments, d'ordre Q ; la seconde fonction caractéristique est déterminée à l'ordre Q par un seul tenseur des cumulants, d'ordre Q.

Lorsque le vecteur signal en entrée est complexe, la première fonction caractéristique est déterminée à l'ordre Q par $\xi_Q = 1 + \lfloor Q/2 \rfloor$ tenseurs de moments d'ordre Q où $\lfloor Q/2 \rfloor$ désigne la partie entière de Q/2 ($\xi_1=1$, $\xi_2=\xi_3=2$, $\xi_4=3$) les autres moments se déduisant par conjugaison; la seconde fonction caractéristique est déterminée à l'ordre Q par $\xi_Q$ tenseurs de cumulants d'ordre Q, les autres cumulants se déduisant par conjugaison.

Souvent, l'étude des statistiques aux premiers ordres 1 et 2 fournit l'essentiel de l'information sur le processus X. Par exemple l'analyse en composante principale bien connue de l'homme du métier consiste à décomposer les matrices de covariances en éléments et directions propres, ce qui permet de déterminer et de classer par ordre d'importance les principales relations de dépendances statistiques entre cordonnées du vecteur X. En traitement d'antenne, ces procédés conduisent aux méthodes à sous-espace telles que MUSIC2 (« Multiple Signal Classification 2 »). Lorsque X présente de plus des caractéristiques fortement non gaussiennes, ce qui est fréquemment le cas des signaux de transmission, les statistiques d'ordre supérieur à 2 apportent des compléments de discrimination. En traitement d'antenne, ces procédés conduisent aux méthodes dites « aux ordres supérieurs » telles que MUSIC4 qui travaille sur les cumulants d'ordre 4, ou la méthode JADE qui exploite conjointement cumulants d'ordres 2 et 4.

On décrit à présent les utilisations possibles des statistiques précédemment décrites pour mettre en oeuvre une méthode de séparation de sources ou de radiogoniométrie connues.

Face à des émetteurs de communication, la plupart des méthodes de séparation de sources, d'identification de vecteurs directeur et de goniométrie parallèle classique à super et haute résolution connues de l'homme du métier utilisent les moments ou cumulants d'ordre 2 et 4 du vecteur signal d'entrée.

On peut citer par exemple :

- L'interférométrie corrélative qui consiste à considérer les N phases de l'un des vecteurs colonnes de la matrice de covariance du signal d'entrée, et à rechercher dans une table de calibration précalculée le N-uplet de phases le plus proche au sens d'un critère de distance (par exemple un critère des moindres carrés), la direction associée à ce N-uplet fournissant alors l'estimation de la direction d'arrivée du signal.

- La corrélation vectorielle qui consiste à considérer les N phases et les N amplitudes de l'un des vecteurs colonnes de la matrice de covariance du signal d'entrée, et à rechercher dans une table de calibration précalculée le 2N-uplet de phases et amplitudes le plus proche au sens d'un critère de distance (par exemple un critère des moindres carrés), la direction associée à ce 2N-uplet fournissant alors l'estimation de la direction d'arrivée du signal.

- La formation de voie adaptative qui consiste à exploiter l'estimation de la matrice de covariance du signal pour constituer le filtre spatial dans chaque direction définie par un vecteur directeur $a_S$ par la relation

$$\varpi_{FAS}(\underline{a}_S) = \left[R_{[\underline{\underline{X}}]}^{(1)}\right]^{-1}.\underline{a}_S$$

puis à appliquer ce filtre au vecteur signal d'entrée X, pour construire le critère

$$C_{FAS}(\underline{a}_S) = \underline{X}^H \left[R_{[\underline{\underline{X}}]}^{(1)}\right]^{-1}.\underline{a}_S,$$

dont la maximisation donne une estimation du ou des vecteurs directeurs $a_S$ correspondant aux sources reçues en entrée ; les directions d'arrivées correspondantes sont ensuite produites par recherche dans une table de calibration préalablement constituée par calcul et/ou mesure.

- Les méthodes à sous-espace de type MUSIC qui consistent à décomposer les tenseurs de covariance (pour une méthode MUSIC à l'ordre 2) et de quadri-covariance (pour une méthode MUSIC à l'ordre 4) pour en rechercher les sous espaces propres, construire des projecteurs orthogonaux, puis produire des estimées des vecteurs directeurs as des sources en entrée, estimées qui réalisent un critère de minimisation des-dites projections ; les directions d'arrivées correspondantes sont ensuite produites par recherche dans une table de calibration préalablement constituée par calcul et/ou mesure.

Les ouvrages de référence « Advances in DOA estimation, chap 8, S. Chandran » et « J.L. Lacoume, P.O. Amblard, P. Comon, "Statistiques d'Ordre Supérieur pour le traitement de signal" Editions Masson, 1997 » décrivent les méthodes MUSIC2, MUSIC4 et JADE précitées ainsi que d'autres méthodes de radiogoniométrie et de séparation de sources qui exploitent les estimateurs statistiques d'un signal X à diversité spatiale et qui sont compatibles de la mise en oeuvre du procédé selon l'invention.

L'invention s'applique avantageusement lorsque les sources émettrices à localiser sont homogènes, c'est-à-dire qu'elles émettent toutes un signal généré selon la même forme d'onde.

L'invention peut être mise en oeuvre dans un système de radiogoniométrie, un senseur radioélectrique, un système radio terrestre, maritime ou aéronautique.

Elle peut être utilisée pour réaliser une fonction de contrôle du spectre ou une fonction de détection, ou « sensing » en anglais, dans une radio cognitive dans le but d'optimiser l'accès de la radio au réseau par la détection, l'estimation de signatures spatiales et la détermination d'angle d'arrivée des sources interférentes avoisinantes.

Le procédé selon l'invention peut avantageusement être appliqué à l'ensemble des signaux acquis dans une bande de fréquence instantanée délimitée par deux fréquences $F_1$ et $F_2$, avec $F_2 > F_1$. Dans ce cas, la contrainte de commutation rapide se traduit par le fait que la période de commutation $\Delta T$ entre deux prélèvements doit être configurée pour rester compatible d'un signal dont la fréquence symbole est la plus élevée possible dans la bande considérée, soit égale à $F_2$. Cette condition est obtenue lorsque la période de commutation $\Delta T$ est strictement inférieure à la quantité $1/(2.N.F_2)$.

L'invention exploite les couplages entre éléments antennaires d'un réseau de petite base et a pour avantage d'améliorer les performances des méthodes connues de l'homme de l'art en rendant l'observation du signal reçu quasi continue malgré la commutation d'une unique voie de réception sur plusieurs éléments antennaires. L'invention permet ainsi de détecter tout type de signaux, qu'ils soient générés avec une forme d'onde continue ou non continue, de traiter des environnements complexes (interférences multi-trajets de propagation) et non stationnaires.

Enfin, l'exploitation de la matrice de couplage du réseau antennaire présente l'avantage d'éviter une calibration d'antenne trop précise et fastidieuse.

## Revendications

1. Procédé de localisation de sources émettant chacune un signal S **caractérisé en ce qu'**il comporte au moins les étapes suivantes exécutées par un système récepteur mono-voie :

   • Réceptionner le ou les signaux en entrée d'un réseau d'antennes (101) comportant une pluralité N d'éléments rayonnants (111,112,11n) en commutant successivement la voie de réception sur les N éléments rayonnants, la période de commutation $\Delta T$ étant configurée pour être strictement inférieure au rapport entre la demi-durée $T_S/2$ d'un symbole dudit signal S et le nombre N d'éléments rayonnants,
   • Prélever, après chaque commutation successive, en sortie de chaque élément rayonnant (111,112,11n), un échantillon du signal reçu afin de construire un vecteur X' du signal spatial reçu par le réseau d'antennes (101),
   • Calculer au moins un premier estimateur statistique $M_{Q,X'}^{(Q)}$ d'ordre Q supérieur ou égal à 1 du signal spatial X' en sortie du réseau d'antennes (101),
   • Déterminer au moins un second estimateur statistique $M_{Q,X}^{(Q)}$ de même ordre Q, pour le signal spatial X en entrée du réseau d'antennes (101) en résolvant les systèmes d'équations $M_{Q,X'}^{(Q)} = C^{(Q)}.M_{Q,X}^{(Q)}$ où $C^{(Q)}$ est un auto-produit tensoriel d'ordre Q de la matrice de couplage C du réseau d'antennes (101), les composantes de ladite matrice de couplage C étant égales aux coefficients de couplage mutuel entre chaque paire d'éléments rayonnants dudit réseau d'antennes (101), ladite matrice de couplage C étant préalablement déterminée et stockée dans une base de données que comporte ledit système,
   • Appliquer une méthode de localisation de sources, telle qu'une méthode de radiogoniométrie, de séparation de sources, d'identification de signature spatiale ou d'identification de vecteurs directeurs de sources, audit second estimateur statistique $M_{Q,X}^{(Q)}$.

2. Procédé de localisation de sources selon la revendication 1 **caractérisé en ce que** lesdits premier et second estimateurs statistiques $M_{Q,X'}^{(Q)}$, $M_{Q,X}^{(Q)}$ sont des estimateurs des moments ou des cumulants d'ordre Q.

3. Procédé de localisation de sources selon la revendication 2 **caractérisé en ce que** lesdits premier et second estimateurs statistiques $M_{Q,X'}^{(Q)}$, $M_{Q,X}^{(Q)}$ sont des estimateurs des produits croisés, de la variance ou de la covariance.

4. Procédé de localisation de sources selon la revendication 3 **caractérisé en ce qu'**il comporte en outre une étape de compensation des composantes du second estimateur statistique du signal spatial X par les valeurs de la fonction d'auto-corrélation $r_s(\tau)$ de la modulation dudit signal émis S, lesdites valeurs étant retardées d'un retard $\tau$ multiple de la période de commutation $\Delta T$.

5. Procédé de localisation de sources selon la revendication 2 **caractérisé en ce que** lesdits estimateurs statistiques sont des estimateurs de la quadri-covariance.

6. Procédé de localisation de sources selon la revendication 5 **caractérisé en ce qu'**il comporte en outre une étape de compensation des composantes du second estimateur statistique du signal spatial X par les valeurs de la fonction de quadri-covariance $q_s(\tau_1,\tau_2,\tau_3)$ de la modulation dudit signal S, lesdites valeurs étant retardées de retards $\tau_1,\tau_2,\tau_3$ multiples de la période de commutation $\Delta T$.

7. Procédé de localisation de sources selon l'une des revendications précédentes **caractérisé en ce que** le prélèvement successif en sortie de chaque élément rayonnant est effectué selon une commutation circulaire.

8. Procédé de localisation de sources selon l'une des revendications précédentes **caractérisé en ce que**, pour générer la matrice de couplage C, chaque coefficient de couplage mutuel entre un premier et un second élément rayonnant est prédéterminé en imposant une tension et/ou en injectant un courant aux bornes du premier élément rayonnant et en mesurant la tension et/ou le courant aux bornes du second élément rayonnant.

9. Procédé de localisation de sources selon l'une des revendications précédentes **caractérisé en ce que** la localisation d'une source consiste à déterminer la direction d'arrivée de l'onde émise par cette source.

10. Procédé de localisation de sources selon l'une des revendications précédentes **caractérisé en ce que** la méthode de localisation de sources est choisie parmi les méthodes suivantes : une méthode d'interférométrie corrélative, une méthode par corrélation vectorielle, une méthode par formation de voie adaptative, une méthode à sous-espace à l'ordre deux ou quatre, ou une méthode JADE.

11. Procédé de localisation de sources selon l'une des revendications précédentes **caractérisé en ce que en ce que** ledit signal S est recherché dans une bande de fréquence instantanée de valeur minimum $F_1$ et de valeur maximum $F_2$, ledit commutateur (102) étant configuré en outre pour que sa période de commutation AT soit strictement inférieure à la quantité $1/(2.N.F_2)$.

12. Système récepteur pour la localisation de sources émettant chacune un signal S comprenant un réseau antennaire (101) composé d'une pluralité d'éléments rayonnants (111,112,113,11n), d'un commutateur (102) pour prélever successivement le signal de sortie de chaque élément rayonnant, d'une voie de réception (103) comprenant un convertisseur analogique-numérique (132) et de moyens (104) d'analyse et de calcul comprenant une unité de calcul et une base de données, **caractérisé en ce que** ledit commutateur (102) est configuré pour que sa période de commutation $\Delta T$ soit strictement inférieure au rapport entre la demi-durée $T_S/2$ d'un symbole dudit signal S et le nombre N d'éléments rayonnants, la base de données contient les valeurs prédéterminées de la matrice de couplage C du réseau antennaire (101) et les moyens (104) d'analyse et de calcul sont adaptés à mettre en oeuvre le procédé de localisation de sources selon l'une des revendications 1 à 11.

13. Système récepteur selon la revendication 12 **caractérisé en ce que** ledit signal S est recherché dans une bande de fréquence instantanée de valeur minimum $F_1$ et de valeur maximum $F_2$, ledit commutateur (102) étant configuré en outre pour que sa période de commutation $\Delta T$ soit strictement inférieure à la quantité $1/(2.N.F_2)$.

**Patentansprüche**

1. Verfahren zum Orten von Quellen, die jeweils ein Signal S aussenden, **dadurch gekennzeichnet, dass** es wenigstens die folgenden von einem Einkanal-Empfangssystem ausgeführten Schritte beinhaltet:

• Empfangen der ein oder mehreren Signale am Eingang einer Antennenanordnung (101), die eine Mehrzahl N von Strahlungselementen (111, 112, 11n) umfasst, durch sukzessives Umschalten des Empfangskanals auf den N Strahlungselementen, wobei die Schaltperiode $\Delta t$ so konfiguriert ist, dass sie strikt niedriger ist als das Verhältnis zwischen der Halbdauer $T_S/2$ eines Symbols des Signals S und der Anzahl N von Strahlungselementen;

• Nehmen, nach jeder sukzessiven Umschaltung, einer Probe des empfangenen Signals am Ausgang jedes Strahlungselementes (111, 112, 11n), um einen Vektor X' des von der Antennenanordnung (101) empfangenen räumlichen Signals zu konstruieren;

• Berechnen wenigstens eines ersten statistischen Schätzgliedes $M_{Q,X'}^{(Q)}$ der Ordnung Q gleich oder größer als 1 des räumlichen Signals X' am Ausgang der Antennenanordnung (101);

• Ermitteln wenigstens eines zweiten statistischen Schätzgliedes $M_{Q,X}^{(Q)}$ derselben Ordnung Q für das räumliche Signal X am Eingang der Antennenanordnung (101) durch Auflösen der Gleichungssysteme

$$M_{Q,X'}^{(Q)} = C^{(Q)} M_{Q,X}^{(Q)},$$

wobei $C^{(Q)}$ ein tensorielles Autoprodukt der Ordnung Q der Kopplungsmatrix C der Antennenanordnung (101) ist, wobei die Komponenten der Kopplungsmatrix C gleich den gegenseitigen Kopplungskoeffizienten zwischen jedem Paar Strahlungselementen der Antennenanordnung (101) sind, wobei die Kopplungsmatrix C zuvor ermittelt und in einer in dem System enthaltenen Datenbank gespeichert wurde;

• Anwenden eines Verfahrens zum Orten von Quellen, wie z.B. ein Funkpeilverfahren, ein Quellentrennveifahren, ein Raumsignaturidentifikationsverfahren oder ein Verfahren zum Identifizieren von Quellenrichtungsvektoren, auf das zweite statistische Schätzglied $M_{Q,X}^{(Q)}$.

2. Verfahren zum Orten von Quellen nach Anspruch 1, **dadurch gekennzeichnet, dass** das erste und zweite statistische Schätzglied $M_{Q,X'}^{(Q)}$, $M_{Q,X}^{(Q)}$ Schätzglieder von Momenten oder Akkumulationen der Ordnung Q sind.

3. Verfahren zum Orten von Quellen nach Anspruch 2, **dadurch gekennzeichnet, dass** das erste und zweite statistische Schätzglied $M_{Q,X'}^{(Q)}$, $M_{Q,X}^{(Q)}$ Schätzglieder von Kreuz-, Varianz- oder Kovarianzprodukten sind.

4. Verfahren zum Orten von Quellen nach Anspruch 3, **dadurch gekennzeichnet, dass** es ferner einen Schritt des Kompensierens von Komponenten des zweiten statistischen Schätzglieds des räumlichen Signals X mit den Werten der Autokorrelationsfunktion $r_s(\tau)$ der Modulation des ausgesendeten Signals S beinhaltet, wobei die Werte um eine Verzögerung $\tau$ verzögert werden, die ein Vielfaches der Schaltperiode $\Delta T$ ist.

5. Verfahren zum Orten von Quellen nach Anspruch 2, **dadurch gekennzeichnet, dass** die statistischen Schätzglieder Schätzglieder der Quadri-Kovarianz sind.

6. Verfahren zum Orten von Quellen nach Anspruch 5, **dadurch gekennzeichnet, dass** es ferner einen Schritt des Kompensierens von Komponenten des zweiten statistischen Schätzglieds des räumlichen Signals X mit den Werten der Quadri-Kovarianzfunktion $q_s(\tau_1, \tau_2, \tau_3)$ der Modulation des Signals S beinhaltet, wobei die Werte um Verzögerungen $\tau_1, \tau_1, \tau_3$ verzögert sind, die ein Vielfaches der Schaltperiode $\Delta T$ sind.

7. Verfahren zum Orten von Quellen nach einem der vorherigen Ansprüche, **dadurch gekennzeichnet, dass** die sukzessive Probenahme am Ausgang jedes Strahlungselements gemäß einer Umlaufschaltung erfolgt.

8. Verfahren zum Orten von Quellen nach einem der vorherigen Ansprüche, **dadurch gekennzeichnet, dass** zum Erzeugen der Kopplungsmatrix C jeder gegenseitige Kopplungskoeffizient zwischen einem ersten und einem zweiten Strahlungselement durch Anlegen einer Spannung an und/oder durch Injizieren eines Stroms in die Anschlüsse des ersten Strahlungselements und durch Messen der Spannung und/oder des Stroms an den Anschlüssen des zweiten Strahlungselements ermittelt wird.

9. Verfahren zum Orten von Quellen nach einem der vorherigen Ansprüche, **dadurch gekennzeichnet, dass** das Orten einer Quelle das Ermitteln der Ankunftsrichtung der von der Quelle ausgesendeten Welle beinhaltet.

10. Verfahren zum Orten von Quellen nach einem der vorherigen Ansprüche, **dadurch gekennzeichnet, dass** das Verfahren zum Orten von Quellen aus den folgenden Methoden ausgewählt ist: korrelative Interferometriemethode, vektorielle Korrelationsmethode, adaptive Kanalbildungsmethode, Subraummethode der zweiten oder vierten Ordnung oder JADE-Methode.

11. Verfahren zum Orten von Quellen nach einem der vorherigen Ansprüche, **dadurch gekennzeichnet, dass** das Signal S in einem momentanen Frequenzband mit einem Mindestwert $F_1$ und einem Höchstwert $F_2$ gesucht wird, wobei der Schalter (102) ferner so konfiguriert ist, dass seine Schaltperiode $\Delta T$ strikt niedriger ist als die Quantität $1/(2.N.F_2)$.

12. Empfangssystem zum Orten von Quellen, die jeweils ein Signal S aussenden, das Folgendes umfasst: eine aus mehreren Strahlungselementen (111, 112, 113, 11n) bestehende Antennenanordnung (101), einen Schalter (102) zum sukzessiven Nehmen von Proben des Ausgangssignals jedes Strahlungselements, einen Empfangskanal (103), der einen Analog-Digital-Wandler (132) umfasst, und Analyse- und Rechenmittel (104) mit einer Recheneinheit und einer Datenbank, **dadurch gekennzeichnet, dass** der Schalter (102) so konfiguriert ist, dass seine Schaltperiode $\Delta T$ strikt niedriger ist als das Verhältnis zwischen der Halbdauer $T_S/2$ eines Symbols des Signals S und der Anzahl N von Strahlungselementen, wobei die Datenbank die vorbestimmten Werte der Kopplungsmatrix C der Antennenanordnung (101) enthält und die Rechen- und Analysemittel (104) zum Ausführen des Verfahrens zum Orten von Quellen nach einem der Ansprüche 1 bis 11 ausgelegt sind.

13. Empfangssystem nach Anspruch 12, **dadurch gekennzeichnet, dass** das Signal S in einem momentanen Frequenzband mit einem Mindestwert $F_1$ und einem Höchstwert $F_2$ gesucht wird, wobei der Schalter (102) ferner so konfiguriert ist, dass seine Schaltperiode $\Delta T$ strikt niedriger ist als die Quantität $1/(2.N.F_2)$.

**Claims**

1. A method for locating sources each emitting a signal S, **characterised in that** it comprises at least the following steps executed by a single-channel receiving system:

    • receiving the signal(s) at the input of an array of antennae (101) comprising a plurality N of radiating elements (111, 112, 11n) by successively switching the reception channel on the N radiating elements, with the switching period $\Delta t$ being configured so as to be strictly lower than the ratio between the half-duration $T_S/2$ of a symbol of said signal S and the number N of radiating elements;
    • taking, after each successive switch and at the output of each radiating element (111, 112, 11n), a sample of the received signal so as to construct a vector X' of the spatial signal received by said array of antennae (101);
    • computing at least one first statistical estimator $M_{Q,x'}^{(Q)}$, of order Q greater than or equal to 1, of the spatial signal X' at the output of said array of antennae (101);
    • determining at least one second statistical estimator $M_{Q,x}^{(Q)}$ of the same order Q, for the spatial signal X at the input of said array of antennae (101) by resolving the systems of equations $M_{Q,x'}^{(Q)} = C^{(Q)}.M_{Q,x}^{(Q)}$, where $C^{(Q)}$ is a tensor auto-product of order Q of the coupling matrix C of said array of antennae (101), with the components of said coupling matrix C being equal to the mutual coupling coefficients between each pair of radiating elements of said array of antennae (101), said coupling matrix C being previously determined and stored in a database included in said system;
    • applying a method for locating sources, such as a radiogoniometry method, a method for separating sources, a method for identifying a spatial signature or a method for identifying source directing vectors, to said second statistical estimator $M_{Q,x}^{(Q)}$.

2. The method for locating sources according to claim 1, **characterised in that** said first and second statistical estimators $M_{Q,x'}^{(Q)}$, $\tilde{M}_{Q,x}^{(Q)}$ are estimators of the moments or the cumulants of order Q.

3. The method for locating sources according to claim 2, **characterised in that** said first and second statistical estimators $M_{Q,x'}^{(Q)}$, $M_{Q,x}^{(Q)}$ are estimators of cross, variance or covariance products.

4. The method for locating sources according to claim 3, **characterised in that** it further comprises a step of compensating components of said second statistical estimator of the spatial signal X with the values of the auto-correlation function $r_s(\tau)$ of the modulation of said transmitted signal S, said values being delayed by a delay $\tau$ that is a multiple of the switching period $\Delta T$.

5. The method for locating sources according to claim 2, **characterised in that** said statistical estimators are estimators of the quadri-covariance.

6. The method for locating sources according to claim 5, **characterised in that** it further comprises a step of compensating components of said second statistical estimator of the spatial signal X with the values of the quadri-covariance function $q_s(\tau 1, \tau_2, \tau_3)$ of the modulation of said signal S, said values being delayed by delays $\tau_1, \tau_2, \tau_3$ that are multiples of the switching period $\Delta T$.

7. The method for locating sources according to any one of the preceding claims, **characterised in that** the successive sampling at the output of each radiating element is carried out according to a cyclical circuit.

8. The method for locating sources according to any one of the preceding claims, **characterised in that**, in order to generate said coupling matrix C, each mutual coupling coefficient between a first and a second radiating element is determined by imposing a voltage and/or by injecting a current into the terminals of said first radiating element and by measuring the voltage and/or the current at the terminals of said second radiating element.

9. The method for locating sources according to any one of the preceding claims, **characterised in that** the locating of a source involves determining the direction of arrival of the wave transmitted by said source.

10. The method for locating sources according to any one of the preceding claims, **characterised in that** said method for locating sources is selected from the following methods: a correlative interferometry method, a vectoral correlation method, an adaptive channel formation method, a second or fourth order sub-space method or a JADE method.

11. The method for locating sources according to any one of the preceding claims, **characterised in that** said signal S is sought in an instantaneous frequency band with a minimum value $F_1$ and a maximum value $F_2$, said switch (102) being further configured so that its switching period $\Delta T$ is strictly lower than the quantity $1/(2.N.F_2)$.

12. A receiving system for locating sources each transmitting a signal S, comprising an antenna array (101) formed by a plurality of radiating elements (111, 112, 113, 11n), a switch (102) for successively sampling the output signal of each radiating element, a reception channel (103) comprising an analogue-digital converter (132) and analysis and computation means (104) comprising a computing unit and a database, **characterised in that** said switch (102) is configured so that its switching period $\Delta T$ is strictly lower than the ratio between the half-duration $T_S/2$ of a symbol of said signal S and the number N of radiating elements, said database containing the predetermined values of the coupling matrix C of said antenna array (101) and said analysis and computation means (104) are designed to implement the method for locating sources according to any one of claims 1 to 11.

13. The receiving system according to claim 12, **characterised in that** said signal S is sought in an instantaneous frequency band with a minimum value $F_1$ and a maximum value $F_2$, said switch (102) being further configured so that its switching period $\Delta T$ is strictly lower than the quantity $1/(2.N.F_2)$.

EP 2 607 916 B1

CAN

$\approx$

RX

$T_e = 1/F_e$

COM

$\Delta t$

**FIG.1**

Période symbole $T_s$

symbole K

$t+N\Delta t$   $t+(N-1)\Delta t$   $t+3\Delta t$   $t+2\Delta t$   $t+\Delta t$   $t$

$t+T_e$

$x'_N(k'_N.T_e)$   $x'_3(k'_3.T_e)$   $x'_2(k'_2.T_e)$   $x'_1(k'_1.T_e)$

$N. \Delta t$

**FIG.2**

FIG.3

FIG.4a

FIG.4b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6278406 B1

**Littérature non-brevet citée dans la description**

- **THOMAS SVANTESSON et al.** High-Resolution Direction Finding using a switched parasitic antenna. *11 th IEEE-Signal processing workshop singapore,* 2001, 508-511